(19) **Europäisches Patentamt**
**European Patent Office**
**Office européen des brevets**

(11) **EP 4 560 981 A1**

(12) **EUROPEAN PATENT APPLICATION**
published in accordance with Art. 153(4) EPC

(43) Date of publication:
**28.05.2025 Bulletin 2025/22**

(51) International Patent Classification (IPC):
***H04L 9/40*** (2022.01)

(21) Application number: **23920742.6**

(22) Date of filing: **17.10.2023**

(86) International application number:
**PCT/CN2023/124925**

(87) International publication number:
**WO 2024/164550 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.02.2023 CN 202310144103**

(71) Applicant: **Tencent Technology (Shenzhen) Company Limited**
**Shenzhen, Guangdong 518057 (CN)**

(72) Inventor: **ZHU, Gengliang**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **BLOCKCHAIN DATA PROCESSING METHOD AND APPARATUS, DEVICE, AND STORAGE MEDIUM**

(57) A blockchain data processing method, executed by a first node device for maintaining a first blockchain in a blockchain network, and comprising: selecting, from a cross-chain communication protocol on the first blockchain, a message encapsulation format compatible with a second blockchain, the second blockchain being maintained by a second node device in the blockchain network, and the first node device and the second node device communicating according to the cross-chain communication protocol (S101); determining a target block where target transaction data associated with the second node device is located, according to the message encapsulation format compatible with the second blockchain, encapsulating the target transaction data and transaction verification information of the target transaction data in the target block on the first blockchain to obtain a target data packet, and encapsulating a block header of the target block according to the message encapsulation format compatible with the second blockchain to obtain an encapsulated block header (S 102); and sending the target data packet to a target relay server associated with the second node device, and sending the encapsulated block header to a target oracle machine server associated with the second node device, wherein the target relay server is used for sending the target data packet to the second node device, the target oracle machine server is used for sending the encapsulated block header to the second node device, and the second node device is used for processing the target transaction data in the target data packet when the verification of the target transaction data is passed according to a data verification rule on the second blockchain, the encapsulated block header and transaction verification information in the target data packet, the data verification rule being associated with the cross-chain communication protocol (S103).

FIG. 6

**Description**

RELATED APPLICATION

This application claims priority to Chinese Patent Application No. 2023101441034, entitled "BLOCKCHAIN DATA PROCESSING METHOD AND APPARATUS, DEVICE, AND STORAGE MEDIUM" and filed on February 10, 2023, which is incorporated herein by reference in its entirety.

FIELD

This disclosure relates to the field of blockchain technologies, and in particular, to a blockchain data processing method and apparatus, a device, and a storage medium.

BACKGROUND

A blockchain technology is a new distributed infrastructure and computing manner of using a blockchain data structure to verify and store data, using a distributed node consensus algorithm to generate and update data, using cryptography to ensure security of data transmission and access, and using a smart contract including automated script code to program and operate data. Simply, a blockchain is a decentralized distributed ledger.

With widespread understanding and recognition of the blockchain technology, many different types of blockchains have emerged. However, in the related art, blockchains are independent of each other, and cross-chain communication between the blockchains is difficult and further requires manual participation. As a result, efficiency of cross-chain communication across blockchains is low, data leakage and data loss are prone to occur, and security of cross-chain communication cannot be well guaranteed.

SUMMARY

According to various embodiments of this disclosure, a blockchain data processing method and apparatus, a device, and a storage medium are provided.

According to one aspect, an embodiment of this disclosure provides a blockchain data processing method, performed by a first node device in a blockchain network and maintaining a first blockchain, the method including:

selecting, from a cross-chain communication protocol on the first blockchain, a message encapsulation format compatible with a second blockchain, the second blockchain being maintained by a second node device in the blockchain network, and the first node device and the second node device communicating according to the cross-chain communication protocol;

determining a target block where target transaction data associated with the second node device is located, encapsulating, according to the message encapsulation format compatible with the second blockchain, the target transaction data and transaction verification information of the target transaction data that are in the target block on the first blockchain to obtain a target data packet, and encapsulating a block header of the target block according to the message encapsulation format compatible with the second blockchain to obtain an encapsulated block header; and

transmitting the target data packet to a target relay server associated with the second node device, and transmitting the encapsulated block header to a target oracle server associated with the second node device, the target relay server being configured to transmit the target data packet to the second node device, the target oracle server being configured to transmit the encapsulated block header to the second node device, and the second node device being configured to process the target transaction data in the target data packet when the target transaction data passes verification according to a data verification rule on the second blockchain, the encapsulated block header, and the transaction verification information in the target data packet, the data verification rule being associated with the cross-chain communication protocol.

According to another aspect, this disclosure provides a blockchain data processing method, performed by a second node device in a blockchain network and maintaining a second blockchain, the method including:

parsing, when a target data packet transmitted by a target relay server is received and an encapsulated block header transmitted by a target oracle server is received, the target data packet to obtain target transaction data and transaction verification information of the target transaction data in the target data packet; the target data packet being transmitted by a first node device maintaining a first blockchain to the target relay server, the encapsulated block header being transmitted by the first node device to the target oracle server, the target data packet being obtained by encapsulating the target transaction data and the transaction verification information of the target transaction data based on a message encapsulation format compatible with the second blockchain maintained by the second node device, the target transaction data being transaction data in a target block of the first blockchain, and the encapsulated block header being obtained by encapsulating a block header of the target block based on the message encapsulation format; the message encapsulation format being selected from a cross-chain communication protocol on the first blockchain, and the first node device and the second node device communicating according to the cross-chain communication protocol;

verifying, based on a data verification rule on the second blockchain, the target transaction data according to the encapsulated block header and the transaction verification information to obtain a verification result, the data verification rule being associated with the cross-chain communication protocol; and

processing the target transaction data in the target data packet when the verification result indicates that the target transaction data passes verification.

According to another aspect, an embodiment of this disclosure provides a blockchain data processing apparatus, including:

a selection module configured to select, from a cross-chain communication protocol on a first blockchain, a message encapsulation format compatible with a second blockchain, the first blockchain being maintained by a first node device in a blockchain network, the second blockchain being maintained by a second node device in the blockchain network, and the first node device and the second node device communicating according to the cross-chain communication protocol;

an encapsulation module configured to determine a target block where target transaction data associated with the second node device is located, encapsulate, according to the message encapsulation format compatible with the second blockchain, the target transaction data and transaction verification information of the target transaction data that are in the target block on the first blockchain to obtain a target data packet, and encapsulate a block header of the target block according to the message encapsulation format compatible with the second blockchain to obtain an encapsulated block header; and

a transmission module configured to transmit the target data packet to a target relay server associated with the second node device, and transmit the encapsulated block header to a target oracle server associated with the second node device, the target relay server being configured to transmit the target data packet to the second node device, the target oracle server being configured to transmit the encapsulated block header to the second node device, and the second node device being configured to process the target transaction data in the target data packet when the target transaction data passes verification according to a data verification rule on the second blockchain, the encapsulated block header, and the transaction verification information in the target data packet, the data verification rule being associated with the cross-chain communication protocol to transmit the target data packet to the target relay server associated with the second node device.

According to yet another aspect, an embodiment of this disclosure provides a blockchain data processing apparatus, including:

a parsing module configured to parse, when a target data packet transmitted by a target relay server to a second node device is received and an encapsulated block header transmitted by a target oracle server to the second node device is received, the target data packet to obtain target transaction data and transaction verification information of the target transaction data in the target data packet; the target data packet being transmitted by a first node device maintaining a first blockchain to the target relay server, the encapsulated block header being transmitted by the first node device to the target oracle server, the target data packet being obtained by encapsulating the target transaction data and the transaction verification information of the target transaction data based on a message encapsulation format compatible with the second blockchain maintained by the second node device, the target transaction data being transaction data in a target block of the first blockchain, and the encapsulated block header being obtained by encapsulating a block header of the target block based on the message encapsulation format; the message encapsulation format being selected from a cross-chain communication protocol on the first blockchain, and the first node device and the second node device communicating according to the cross-chain communication protocol;

a data verification module configured to verify, based on a data verification rule on the second blockchain, the target transaction data according to the encapsulated block header and the transaction verification information to obtain a verification result, the data verification rule being associated with the cross-chain communication protocol; and

a transaction processing module configured to process the target transaction data in the target data packet when the verification result indicates that the target transaction data passes verification.

According to another aspect, an embodiment of this disclosure provides a computer device, including: a processor and a memory, the memory having computer-readable instructions stored therein, and the processor being configured to execute the computer-readable instructions to cause the computer device to perform the method in any one of the method embodiments of this disclosure.

According to still another aspect, an embodiment of this disclosure provides a computer-readable storage medium, the computer-readable storage medium having computer-readable instructions stored therein, and the computer-readable instructions being loaded and executed by a processor to cause the processor to perform the method in any one of the method embodiments of this disclosure.

According to yet another aspect, an embodiment of this disclosure provides a computer program product, including computer-readable instructions, the computer-readable instructions being stored in a computer-readable storage medium, and the computer-readable instructions being read and executed by a processor to cause the processor to perform the method in any one of the method embodiments of this disclosure.

Details of one or more embodiments of this disclosure are provided in the accompanying drawings and descriptions below. Other features, objectives, and advantages of this disclosure become apparent from the specification, the drawings, and the claims.

BRIEF DESCRIPTION OF THE DRAWINGS

To describe the technical solutions in the embodiments of this disclosure or the conventional technology more clearly, the following briefly describes the accompanying drawings required for describing the embodiments or the conventional technology. Apparently, the accompanying drawings in the following descriptions show merely some embodiments of this disclosure, and a person of ordinary skill in the art may still derive other drawings from these accompanying drawings without creative efforts.

FIG. 1 is a schematic diagram of a blockchain structure according to an embodiment of this disclosure.

FIG. 2 is a schematic diagram of generation of a blockchain according to an embodiment of this disclosure.

FIG. 3 is a schematic diagram of a hierarchical structure of a blockchain network according to an embodiment of this disclosure.

FIG. 4 is a schematic structural diagram of a blockchain network applied to an electronic bill according to an embodiment of this disclosure.

FIG. 5 is a schematic diagram of a scenario of cross-chain data interaction according to an embodiment of this disclosure.

FIG. 6 is a schematic flowchart of a blockchain data processing method according to an embodiment of this disclosure.

FIG. 7 is a schematic diagram of cross-chain communication according to an embodiment of this disclosure.

FIG. 8 is a schematic flowchart of a blockchain data processing method according to an embodiment of this disclosure.

FIG. 9 is a schematic diagram of disclosure of cross-chain communication according to an embodiment of this disclosure.

FIG. 10 is a schematic structural diagram of a blockchain data processing apparatus according to an embodiment of this disclosure.

FIG. 11 is a schematic structural diagram of a blockchain data processing apparatus according to an embodiment of this disclosure.

FIG. 12 is a schematic diagram of a computer device according to an embodiment of this disclosure.

DESCRIPTION OF EMBODIMENTS

The technical solutions in embodiments of this disclosure are clearly and completely described in the following with reference to the accompanying drawings in the embodiments of this disclosure. Apparently, the described embodiments are merely some rather than all of the embodiments of this disclosure. All other embodiments obtained by a person of ordinary skill in the art based on the embodiments of this disclosure without creative efforts shall fall within the protection scope of this disclosure.

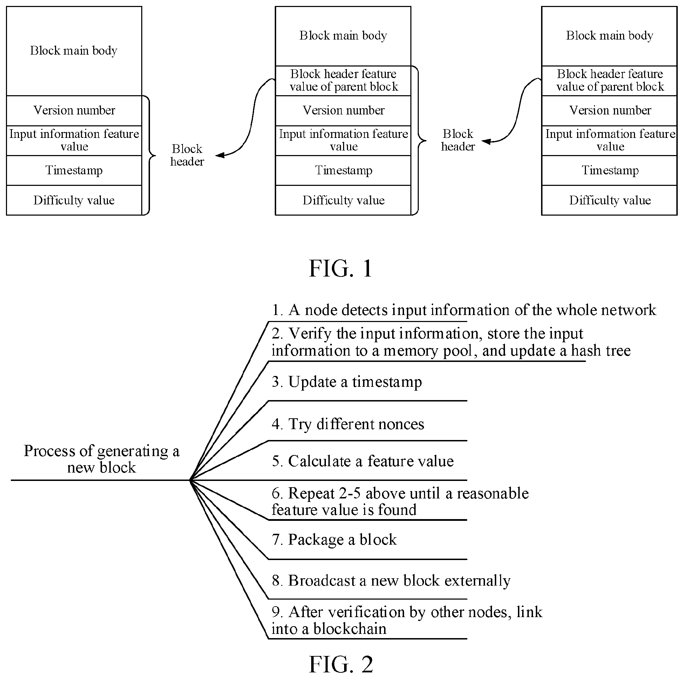

A blockchain is a new disclosure mode of computer technologies such as distributed data storage, point-to-point transmission, a consensus mechanism, and an encryption algorithm. The blockchain is essentially a decentralized database, and is a string of a data block generated in a cryptographic manner. Each data block includes information about a batch of network transactions, which is configured to verify validity of the information (anti-counterfeiting) and generate a next block. The blockchain may include a blockchain underlying platform, a platform product service layer, and an disclosure service layer. The blockchain includes a plurality of blocks. Referring to FIG. 1, FIG. 1 is a schematic diagram of a blockchain structure according to an embodiment of this disclosure. As shown in FIG. 1, a blockchain includes a plurality of blocks. A founding block includes a block header and a block main body. The block header stores an input information feature value, a version number, a timestamp, and a difficulty value, and the block main body stores input information. A next block of the founding block uses the founding block as a parent block, and the next block also includes a block header and a block main body. The block header stores an input information feature value of a current block, a block header feature value of the parent block, a version number, a timestamp, and a difficulty value. By analogy, block data stored in each block in the blockchain is associated with block data stored in the parent block, thereby ensuring security of the input information in the blocks.

When the blocks in the blockchain are generated, referring to FIG. 2, FIG. 2 is a schematic diagram of generation of a blockchain according to an embodiment of this disclosure, after receiving input information, performing verification on the input information, and completing the verification, a node where the blockchain is located stores the input information in a memory pool, and updates a hash tree configured for recording the input information. Subsequently, an update timestamp is updated into a time at which the input information is received, and different nonces are tried to calculate the feature value a plurality of times, so that the calculated feature value can meet the following formula (1):

$$SHA256\big(SHA256(version + prev\_hash + merkle\_root + ntime + nbits + x)\big) < \text{TARGET}(1)$$

where SHA256 in the formula (1) is a feature value algorithm for calculating feature values; version (version number) is version information of a relevant block protocol in the blockchain; *prev_hash* is a block header feature value of a parent block of a current block; *merkle_root* is a feature value of the input information; *ntime* is an update time at which the timestamp is updated; *nbits* is current difficulty, which has a fixed value within a period of time and is determined again after a fixed period of time expires; x is a nonce; and *TARGET* is a feature value threshold, where the feature value threshold may be determined according to *nbits.*

When the nonce that meets the above formula (1) is calculated, information may be correspondingly stored, so that a block header and a block main body are generated to obtain a current block. Subsequently, the blockchain may broadcast a newly generated current block externally, i.e., transmit the current block separately to other nodes in a data sharing system where the current block is located. Each node in the data sharing system stores a same blockchain. The other nodes perform verification on the current block, and after completing the verification, add the current block into the blockchain that the other nodes store.

In this embodiment of this disclosure, device feature information of a node device may be inputted into a device validity verification model. The device validity verification model verifies validity of the node device based on a risk control rule in a cross-chain communication protocol, and inputs a validity verification result. The validity verification result is configured for indicating whether the node device is valid. The device validity verification model is stored on the blockchain, which can improve efficiency of determination of the validity of the node device.

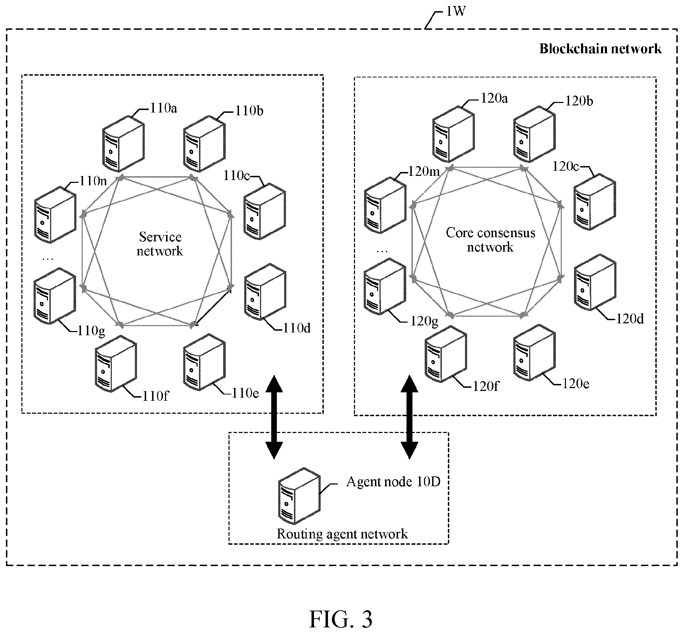

Referring to FIG. 3, FIG. 3 is a schematic diagram of a hierarchical structure of a blockchain network according to an embodiment of this disclosure. In this embodiment of this disclosure, the hierarchical structure of the blockchain network may be a blockchain network 1W shown in FIG. 3. A complete blockchain service system corresponding to the blockchain network 1W may include a service network, a core consensus network, and a routing agent network where an agent node 10D is located that are shown in FIG. 3.

One or more agent nodes may be provided in the routing agent network, which is not limited herein. The agent node 10D is taken as an example in this embodiment of this disclosure. The agent node 10D may be configured to perform network isolation on the service network and the core consensus network. The agent node 10D may be a standalone physical server, or a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform, which is not limited herein. The agent node 10D may perform network layering on a peer to peer (P2P) network to form a hierarchical structure of "service network-core consensus network", thereby improving confidentiality and security of data on a blockchain.

A blockchain node system corresponding to the service network (i.e., a witness network) shown in FIG. 3 may include one or more blockchain nodes. A quantity of nodes in the blockchain node system corresponding to the service network is not limited herein. For example, the blockchain node system corresponding to the service network may specifically include a node 110a, a node 110b, a node 110c, ..., and a node 110n. In this embodiment of this disclosure, the blockchain node in the service network may be referred to as a service node. The service node does not need to participate in accounting consensus and is mainly configured to execute a transaction service to obtain transaction data associated with the transaction service. The service node herein may be a full node including a complete blockchain database, or a lightweight node storing partial data in a blockchain database, which is not limited herein. In order to reduce a waste of storage space of the service node, the service node in this embodiment of this disclosure may be, for example, a lightweight node (simplified payment verification (SPV)). The service node does not need to store complete transaction data, and instead, obtains, from the core consensus network shown in FIG. 3 through the agent node 10D, block header data and partially authorized visible block data (for example, a transaction associated with the service node).

A blockchain node system corresponding to the core consensus network shown in FIG. 3 may also include one or more blockchain nodes. A quantity of nodes in the blockchain node system corresponding to the core consensus network is not limited herein. For example, the blockchain node system corresponding to the core consensus network may specifically include a node 120a, a node 120b, a node 120c, ..., and a node 120m. In this embodiment of this disclosure, the node in the core consensus network is referred to as a consensus node (that is, an accounting node), and the consensus node may run a blockchain consensus protocol.

In this embodiment of this disclosure, the agent node, the service node, and the consensus node may be collectively referred to as blockchain nodes in the blockchain network 1W. The blockchain node may be a server accessing the blockchain network 1W, or a user terminal accessing the blockchain network 1W. A specific form of the blockchain node is not limited herein. The service network and the core consensus network shown in FIG. 3 may be in different network environments. For example, in general, the service node is deployed in the service network in a public network, while the consensus node running the blockchain consensus protocol is deployed in a private core consensus network, both of which may interact through a routing boundary.

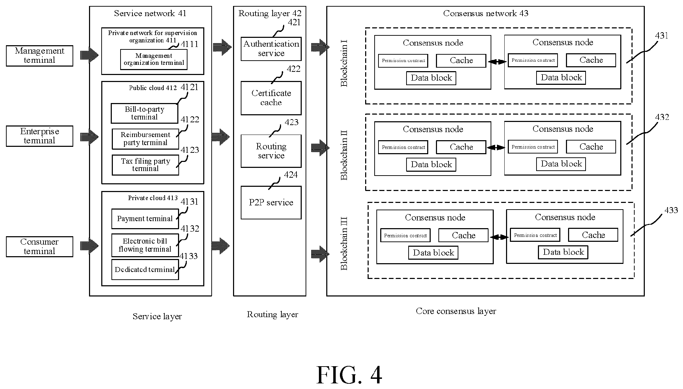

As shown in FIG. 4, FIG. 4 is a schematic structural diagram of a blockchain network applied to an electronic bill according to an embodiment of this disclosure. As shown in FIG. 4, when the blockchain network in FIG. 3 is applied to a scenario of an electronic bill, the blockchain network may record transaction data generated in an entire electronic bill flowing process. Referring to FIG. 4, the blockchain network includes a service network 41, a core consensus network 42, and a routing agent network 43. The electronic bill flowing process includes processes such as claiming of the electronic bill, issuance of the electronic bill, reimbursement of the electronic bill, and tax-filing of the electronic bill, and the issuance of the electronic bill is also referred to as generation of the electronic bill. Roles related to the entire electronic bill flowing process include a supervision organization, a bill-to-party, a reimbursement party, and a tax filing party. Therefore, the service network 41 includes a private network for a supervision organization 411 providing a related service for the supervision organization, a public cloud 412 providing a related service for the bill-to-party, the reimbursement party, and the tax filing party, and a private cloud 413 providing an electronic bill storage service for a consumer. The private network for a supervision organization 411 includes a computer device used by the supervision organization related to the electronic bill, including a management organization terminal 4111. A management terminal may access the private network for a supervision organization 411. The public cloud 412 includes computer devices used by the bill-to-party, the reimbursement party, and the tax filing party related to the electronic bill, including a bill-to-party terminal 4121, a reimbursement party terminal 4122, and a tax filing party terminal 4123. The bill-to-party may be a billing service provider, the reimbursement party may be a reimbursement service provider, and an enterprise terminal may access the public cloud 412. The private cloud 413 includes computer devices used by users related to the electronic bill, including a payment terminal 4131 configured for payment, an electronic bill flowing terminal 4132 configured to temporarily store the electronic bill for the users, and a dedicated terminal 4133 for some enterprises. A consumer terminal may access the private cloud 413. The computer devices in the private network for a supervision organization 411, the public cloud 412, and the private cloud 413 may all be used as service nodes to transmit a data chaining request or a data query request for an electronic bill to the consensus network 43 by using a routing layer 42.

Any routing node in the routing layer 42 includes functional modules for providing an authentication service 421, a certificate cache 422, a routing service 423, and a P2P service 424. The authentication service 421 is configured for performing identity verification on the service node in the service network 41, the certificate cache 422 is configured for caching certificates of identity of nodes, the routing service 423 is configured for implementing network isolation between the service network 41 and the consensus network 43, and the P2P service 424 is configured for distributing a task between routing nodes having idempotence. A P2P network is formed between the routing nodes. A P2P protocol is an disclosure layer protocol that runs on top of a transmission control protocol (TCP).

The consensus network 43 includes a plurality of consensus branch networks, for example, a blockchain network I 431, a blockchain network II 432, and a blockchain network III 433. Each consensus branch network includes a plurality of consensus nodes (i.e., consensus node devices). The plurality of consensus nodes in each consensus branch network maintain a blockchain corresponding to the consensus branch network. For example, the plurality of consensus nodes included in the blockchain network I 431 are configured to maintain a blockchain I corresponding to the blockchain network I 431. Different blockchains have different roles in the consensus network 43. For example, some blockchains are configured to record transaction information related to electronic bills belonging to a certain bill number segment interval, and some blockchains are configured to record transaction information related to red electronic bills. "Red" means that an electronic bill originally issued is incorrect or needs to be corrected, and a new invoice is issued to adjust the account. A red electronic bill may be an electronic bill in which a red event occurs.

When data related to the electronic bill needs to be recorded, a blockchain to which the data is to be recorded may be determined according to a permission of the service node, and then the data is recorded by a consensus branch network maintaining the blockchain. The consensus node may generally be computer devices used by supervision organizations of regions. The consensus node in each consensus branch network includes a permission contract. The permission contract stores flow logic for an entire lifecycle of an electronic bill, for example, a bill state of the electronic bill, a flowing process, an access permission of data, a claiming condition of the electronic bill, and an issuance condition of the electronic bill. The consensus node further includes a cache and a data block. The functions may provide support for chaining and querying of transaction information. According to the solution, cross-chain data transactions between different blockchains can be achieved, for example, cross-chain data transactions between different blockchains in the service network, or cross-chain data transactions between blockchains in the service network and blockchains in the consensus network, or cross-chain data transactions between different blockchains in the consensus network as shown in FIG. 4.

In this embodiment of this disclosure, a first blockchain network to which a first blockchain belongs may be the same as a second blockchain network to which a second blockchain belongs. That is, cross-chain communication between different blockchains in a same blockchain network can be achieved in this disclosure. For example, the first blockchain and the second blockchain are both blockchains in the above consensus network 43. For example, the first blockchain may be a blockchain I, and the second blockchain may be a blockchain II. Certainly, in this embodiment of this disclosure, the blockchain network to which the first blockchain belongs may be different from the blockchain network to which the second blockchain belongs. That is, cross-chain communication between different blockchains in different blockchain networks can be achieved in this disclosure. For example, the first blockchain network to which the first blockchain belongs is the service network 41, and the second blockchain network to which the second blockchain belongs is the consensus network 43.

All the node devices in the blockchain network as referred to in this embodiment of this disclosure each may be a mobile phone, a tablet computer, a notebook computer, a palmtop computer, a mobile Internet device (MID), a vehicle, roadside equipment, an aircraft, and a wearable device, or may be an intelligent device with a data processing function such as a smartwatch, a smart band, or a pedometer. All the node devices may correspond to a same device type or different device types.

For ease of understanding, in this embodiment of this disclosure, the blockchain I in the consensus network 43 shown in FIG. 4 may be taken as the first blockchain, and the blockchain II in the consensus network 43 shown in FIG. 4 may be taken as the second blockchain. The first node device may be any consensus node in the blockchain I shown in FIG. 4. The second node device may be any consensus node in the blockchain II shown in FIG. 4. When there is target transaction data in the first node device that needs to be synchronized to the second node device, the first node device may select, from a cross-chain communication protocol on the first blockchain, a message encapsulation format compatible with the second blockchain. The cross-chain communication protocol includes a rule that needs to be followed when cross-chain transactions (such as cross-chain data transmission) are performed between node devices. In other words, the cross-chain transactions can be performed only when the cross-chain communication protocol is met between the node devices. The target transaction data specifically refers to transaction data that needs to be synchronized to the second node device.

The first node device is a node device maintaining the first blockchain. That is, the first node device may acquire transaction data that needs to be recorded in the first blockchain, and generate a new block according to the transaction data that needs to be recorded in the first blockchain. The first node device may add the new block generated to the first blockchain. The second node device is a node device maintaining the second blockchain. That is, the second node device may acquire transaction data that needs to be recorded in the second blockchain, and generate a new block according to the transaction data that needs to be recorded in the second blockchain. The second node device may add the new block generated to the second blockchain. The first node device and the second node device both meet the cross-chain communication protocol. In other words, when performing cross-chain transactions, both the first node device and the second node device need to follow a rule agreed in the cross-chain communication protocol. All first node devices that maintain the first blockchain and all second node devices that maintain the second blockchain meet the cross-chain communication protocol, so that cross-chain transactions between the first blockchain and the second blockchain can be achieved. The message encapsulation format compatible with the second blockchain may include a data transaction structure, an encoding mode, a verification mode, and an encryption mode used by the second blockchain. Data processing specifications on different blockchains are different. Therefore, cross-chain data (such as target transaction data, transaction verification information, and block headers) that needs to be transmited to the second blockchain can be encapsulated according to the message encapsulation format compatible with the second blockchain (i.e., the cross-chain data is processed, such as through serialization, coding and/or encryption, according to the message encapsulation format compatible with the second blockchain and then packaged the processed data into a data package that meets the requirements of the blockchain protocol). In this way, the second node device can successfully parse the cross-chain data transmitted by the first node device.

Further, the first node device may encapsulate, according to the message encapsulation format, the target transaction data and transaction verification information of the target transaction data that are in a target block on the first blockchain to obtain a target data packet, and encapsulate a block header of the target block according to the message encapsulation format to obtain an encapsulated block header. The target transaction data is transaction data specified by a service requirement or a request. The target block is a block that records the target transaction data. The target data packet is a data packet obtained by encapsulating the target transaction data and the transaction verification information of the target transaction data.

The target transaction data is associated with the second node device. For example, the target transaction data is cross-chain data that the first node device corresponding to the first blockchain needs to transmit to the second node device, or the target transaction data may be cross-chain data requested from the first node device by the second node device corresponding to the second blockchain. The first node device may transmit the target data packet to a target relay server associated with the second node device, and transmit the encapsulated block header to a target oracle server associated with the second node device. The target relay server is configured to transmit the target data packet to the second node device. The target oracle server is configured to transmit the encapsulated block header to the second node device.

Both the target relay server and the target oracle server are independent entities outside the blockchain. In this way, the target relay server and the target oracle server outside the blockchain forward the target data packet and the encapsulated block header respectively. Compared with the manner of using an intermediate blockchain to transmit cross-chain data between two blockchains, this solution can achieve decentralization and can also form an open cross-chain ecosystem, thereby improving security of cross-chain data transmission. At the same time, the second node device may verify the target transaction data according to a data verification rule on the second blockchain, the encapsulated block header, and the transaction verification information in the target data packet, and process the target transaction data in the target data packet when the target transaction data passes verification. The data verification rule on the second blockchain is associated with the cross-chain communication protocol. That is, the data verification rule on the second blockchain may be agreed in the cross-chain communication protocol.

In this way, the target oracle server and the relay server transmit the block header and the target data packet in a streaming manner respectively. Compared with the solution of deploying light nodes of each other's chains between two chains and synchronizing complete block headers of each other's chains, in this solution, only the block header corresponding to the target transaction data is transmitted, which can reduce a verification cost, thereby reducing a cross-chain transaction cost. At the same time, as long as an independence condition between the target oracle server and the target relay server is not broken, trustless effective transfer of arbitrary cross-chain data can be guaranteed. Under the premise of maintaining no trust, the target transaction data is verified only according to the encapsulated block header and the transaction verification information, and the storage space on the second blockchain is consumed only when in real need (such as when the target transaction data passes the verification), which greatly saves on-chain storage costs and storage expenses.

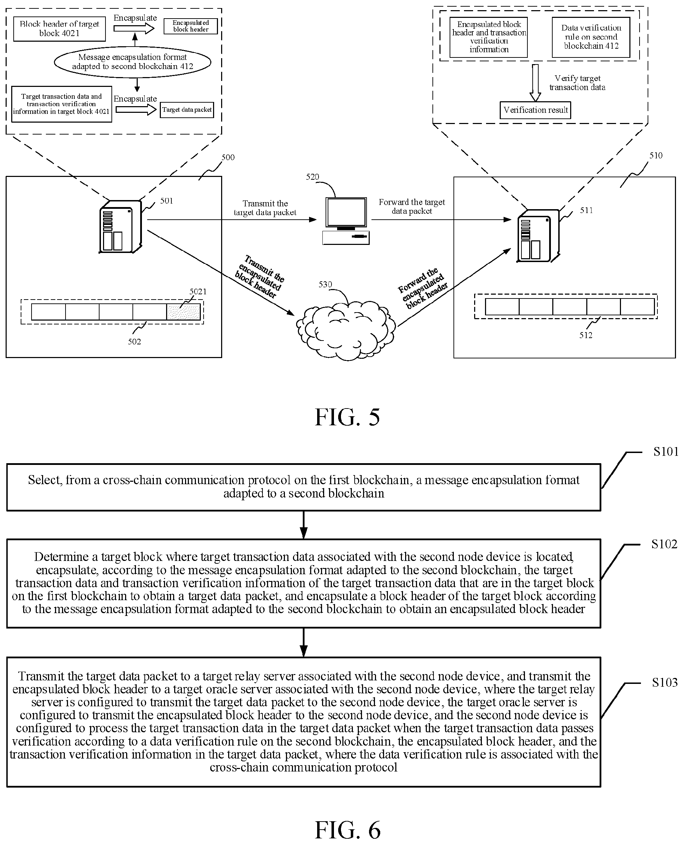

For ease of understanding, further, referring to FIG. 5, FIG. 5 is a schematic diagram of a scenario of cross-chain data interaction according to an embodiment of this disclosure. As shown in FIG. 5, a first blockchain network 500 in this embodiment of this disclosure may be the core consensus network above, a second blockchain network 510 in this embodiment of this disclosure may also be the core consensus network above, a first blockchain 502 in this embodiment of this disclosure may be the blockchain I 431 in the core consensus network above, and a second blockchain 512 in this embodiment of this disclosure may be the blockchain II 432 in the core consensus network above. As shown in FIG. 5, a first node device 501 in this embodiment of this disclosure may be a consensus node in the core consensus network above that has a block production function and maintains the blockchain I 431, and the first node device 501 may be any consensus node in the consensus nodes maintaining the blockchain I 431 shown in FIG. 4 above. A second node device 511 in this embodiment of this disclosure may be a consensus node in the core consensus network above that has a block production function and maintains the blockchain II 432, and the second node device 511 may be any consensus node in the consensus nodes maintaining the blockchain II 432 shown in FIG. 4 above. The first node device 501 and the second node device 511 both meet the cross-chain communication protocol. In this way, cross-chain data transactions can be achieved between the first node device 501 maintaining the first blockchain 502 and the second node device 511 maintaining the second blockchain 512. The first node device 501 and the second node device 511 are different node devices that maintain different blockchains. For example, the first node device 501 may be the management terminal in FIG. 4 above, and the second node device 511 may be the enterprise terminal in FIG. 4 above.

The service node in the service network may perform a transaction service with the target transaction data associated with the second node device 511, and may then generate a transaction for broadcast to the core consensus network (i.e., a to-be-broadcast transaction) according to a transaction execution result of the transaction service. The transaction service herein may be a service such as a cross-chain data synchronization service and a cross-chain data transfer service. The target transaction data may refer to cross-chain transaction data between the first node device 501 and the second node device 511 (such as cross-chain synchronization data that the first node device 501 needs to synchronize to the second node device 511, or cross-chain transfer data between the first node device 501 and the second node device 511). For example, the target transaction data may be (Account 1 in the first blockchain 502, Account 2 in the second blockchain 512, 20), where Account 1 represents a resource transfer-from account, Account 2 represents a resource transfer-to account, and 20 represents an amount of resources to be transferred. Account 1 is an account in the first blockchain 502, and Account 2 is an account in the second blockchain 512.

When receiving a to-be-broadcast transaction transmitted by the service node through the agent node, the first node device 501 may verify the received to-be-broadcast transaction. When the verification is successful, the received to-be-broadcast transaction is stored in a node transaction pool of the first node device 501, and a block corresponding to the target transaction data is generated. Further, the first node device 501 may transmit the block corresponding to the target transaction data to another node device maintaining the first blockchain 502. When the another node device maintaining the first blockchain 502 successfully reaches consensus on the block corresponding to the target transaction data, the first node device 501 may add the block corresponding to the target transaction data to the first blockchain 502 to obtain a target block 5021.

The first node device 501 may select, from a cross-chain communication protocol on the first blockchain, a message encapsulation format compatible with the second blockchain 512 corresponding to the second node device 511. The message encapsulation format may include a data transaction structure, an encoding mode, a verification mode, and an encryption mode used by the second blockchain. Data processing specifications on different blockchains are different. Therefore, cross-chain data (such as target transaction data, transaction verification information, and block headers) that needs to be transmitted to the second blockchain 512 can be encapsulated according to the message encapsulation format compatible with the second blockchain 512. In this way, the second node device 511 can successfully parse the cross-chain data transmitted by the first node device 501.

When a node device meets the cross-chain communication protocol, a message encapsulation format compatible with a blockchain maintained by the corresponding node device may be added to the cross-chain communication protocol, which facilitates cross-chain transactions of data on different blockchains. Further, the first node device 501 may acquire target transaction data and transaction verification information of the target transaction data in the target block 5021. The transaction verification information is configured for verifying whether the target transaction data is successfully executed in the first node device, and may include a Merkle path associated with the target block and a parent block hash value of the target block. The first node device 501 may encapsulate the target transaction data and the transaction verification information in the target block 5021 according to the message encapsulation format compatible with the second blockchain 512 to obtain the target data packet. At the same time, the first node device 501 may encapsulate a block header of the target block 5021 according to the message encapsulation format compatible with the second blockchain 512 to obtain an encapsulated block header.

As shown in FIG. 5, the first node device 501 may transmit the target data packet to a target relay server 520 and transmit the encapsulated block header to a target oracle server. When transmitting the target data packet, the first node device 501 may simultaneously transmit a blockchain identifier of the second blockchain 512. In this way, the target relay server 520 can forward, according to the blockchain identifier of the second blockchain 512, the target data packet to the second node device 511 maintaining the second blockchain 512. Similarly, when transmitting the encapsulated block header, the first node device 501 may simultaneously transmit the blockchain identifier of the second blockchain 512. In this way, a target oracle server 530 can forward, according to the blockchain identifier of the second blockchain 512, the encapsulated block header to the second node device 511 maintaining the second blockchain 512. As shown in FIG. 5, the target relay server 520 and the target oracle server 530 are independent entities outside the blockchain. When receiving the target data packet, the target relay server 520 may automatically forward the target data packet to the second node device 511. When receiving the encapsulated block header, the target oracle server 530 may automatically forward the encapsulated block header to the second node device 511.

As shown in FIG. 5, after receiving the target data packet forwarded by the target relay server 520 and the encapsulated block header forwarded by the target oracle server, the second node device 511 may acquire a data verification rule on the second blockchain 512. The data verification rule may be a verification rule agreed in the cross-chain communication protocol. The second node device 511 may verify, based on the data verification rule, the target transaction data in the target data packet according to the encapsulated block header and the transaction verification information in the target data packet to obtain a verification result. If the verification result indicates that the target transaction data passes the verification, the target transaction data is processed.

For example, the transaction verification information may refer to a Merkle path corresponding to the target block, and the second node device 511 may perform a hash algorithm on the target transaction data to obtain a to-be-verified hash value, and perform a hash algorithm on the to-be-verified hash value according to the Merkle path corresponding to the target block to obtain a to-be-verified tree root hash value. Further, the second node device 511 may acquire a Merkle tree hash value from the encapsulated block header, and the data verification rule on the second blockchain may include a verification rule about the Merkle path. The verification rule about the Merkle path is configured for indicating that when the Merkle tree root hash value in the encapsulated block header is the same as the to-be-verified tree root hash value obtained based on the Merkle path, it is determined that the target transaction data passes the verification, and when the Merkle tree root hash value in the encapsulated block header is different from the to-be-verified tree root hash value obtained based on the Merkle path, it is determined that the target transaction data does not pass the verification. If the second node device 511 determines that the Merkle tree root hash value in the encapsulated block header is the same as the to-be-verified tree root hash value, a verification result configured for indicating that the target transaction data passes the verification is generated. If the second node device 511 determines that the Merkle tree root hash value in the encapsulated block header is different from the to-be-verified tree root hash value, a verification result configured for indicating that the target transaction data does not pass the verification is generated.

In this way, the target oracle server 530 and the relay server 520 transmit the encapsulated block header and the target data packet in a streaming manner respectively. Compared with the solution of deploying light nodes of each other's chains between two chains and synchronizing complete block headers of each other's chains, in this solution, only the block header corresponding to the target transaction data is transmitted, which can reduce a verification cost, thereby reducing a cross-chain transaction cost. In addition, security of cross-chain data transmission can be improved by transmitting data configured for verifying the target transaction data (i.e., the encapsulated block header and the transaction verification information) through the target oracle server 530 and the relay server 520. As long as an independence condition between the target oracle server 530 and the target relay server 520 is not broken, trustless effective transfer of arbitrary cross-chain data can be guaranteed. Under the premise of maintaining no trust, the target transaction data is verified only according to the encapsulated block header and the transaction verification information, and the storage space on the second blockchain is consumed only when in real need (such as when the target transaction data passes the verification), which greatly saves on-chain storage costs and storage expenses.

Further, referring to FIG. 6, FIG. 6 is a schematic flowchart of a blockchain data processing method according to an embodiment of this disclosure. As shown in FIG. 6, the method may be performed by a first node device in the blockchain network and maintaining the first blockchain. The blockchain network may refer to the above core consensus network, the above service network, or other blockchain networks, which is not limited in this embodiment of this disclosure. The first node device may be a server connected to the blockchain network, or may be a user terminal connected to the blockchain network. The first node device may refer to any node device in the node devices that maintain the first blockchain. A specific form of the first node device is not limited herein. The method may include, but is not limited to, at least the following operations:

S101: Select, from a cross-chain communication protocol on the first blockchain, a message encapsulation format compatible with a second blockchain.

The second blockchain is maintained by a second node device in the blockchain network. The first node device and the second node device communicate according to a cross-chain communication protocol.

When the first node device needs to synchronize target transaction data associated with the second node device to the second node device, the first node device may select, from the cross-chain communication protocol on the first blockchain, the message encapsulation format compatible with the second blockchain.

The first node device is a node device maintaining the first blockchain. In other words, blocks on the first blockchain may be generated and added by the first node device. The second node device is a node device maintaining the second blockchain. Similarly, blocks on the second blockchain may be generated and added by the second node device.

The first node device and the second node device both meet the cross-chain communication protocol. In other words, the first node device and the second node device both need to agree to the cross-chain communication protocol, and the first node device and the second node device both need to perform cross-chain transactions according to the cross-chain communication protocol. Operations that need to be performed and rules that need to be followed when different blockchains perform cross-chain transactions are recorded in the cross-chain communication protocol.

The message encapsulation format compatible with the second blockchain refers to a message encapsulation format applicable to the second blockchain. The message encapsulation format complies with a data processing specification of the second blockchain. Messages encapsulated using the message encapsulation format may be correctly identified and processed by nodes of the second blockchain. The message encapsulation format complies with the cross-chain communication protocol. The message encapsulation format compatible with the second blockchain may be pre-configured, and an association between the blockchain identifier of the second blockchain and the message encapsulation format is established, so that the message encapsulation format compatible with the second blockchain can be determined based on the association by using the blockchain identifier of the second blockchain.

The message encapsulation format compatible with the second blockchain may include a data transaction structure, an encoding mode, a verification mode, and an encryption mode used in the second blockchain. Data processing specifications on different blockchains are different. Therefore, cross-chain data (such as target transaction data, transaction verification information, and block headers) that needs to be transmitted to the second blockchain can be encapsulated according to the message encapsulation format compatible with the second blockchain. in this way, the second node device can successfully parse the cross-chain data transmitted by the first node device.

When the first node device maintaining the first blockchain receives the target transaction data associated with the second node device, a target smart contract on the first blockchain may be called to perform a transaction service corresponding to the target transaction data according to a transaction type of the target transaction data. The target transaction data associated with the second node device may refer to cross-chain transaction data between the first node device and the second node device (such as cross-chain synchronization data that the first node device needs to synchronize to the second node device or cross-chain asset transfer data between the first node device and the second node device). The cross-chain asset transfer data may be configured for transferring virtual assets such as game gold coins, game diamonds, and electronic bills across chains. The target smart contract on the first blockchain is a contract matching the transaction type of the target transaction data. For example, if the transaction type of the target transaction data is a digital collection transaction, the target smart contract on the first blockchain may refer to a digital collection contract. For example, the target transaction data may be (Account 1 in the first blockchain 502, Account 2 in the second blockchain 512, 20), where Account 1 represents a resource transfer-from account, Account 2 represents a resource transfer-to account, and 20 represents an amount of resources to be transferred. Account 1 is an account in the first blockchain 502, and Account 2 is an account in the second blockchain 512.

The first node device calls the target smart contract to perform the transaction service corresponding to the target transaction data, generates a target block about the target transaction data, and adds the target block corresponding to the target transaction data to the first blockchain. For example, when the target transaction data is (Account 1 in the first blockchain 502, Account 2 in the second blockchain 512, 20), the first node device may perform a transaction in which 20 pieces of resource data are deducted from Account 1 of the first blockchain, generate a target block corresponding to the target transaction data, and store the target block corresponding to the target transaction data on the first blockchain. Since the target transaction data is cross-chain transaction data between the first node device and the second node device, the first node device may transmit the target transaction data to the second node device based on the cross-chain communication protocol on the first blockchain and the message encapsulation format compatible with the second blockchain.

In some embodiments, the first blockchain includes a sub-ledger smart contract (SpvContract) generated based on the cross-chain communication protocol, and the selecting, from a cross-chain communication protocol on the first blockchain, a message encapsulation format compatible with a second blockchain includes: acquiring a blockchain identifier of the second blockchain; acquiring an adaptation library set from the sub-ledger smart contract on the first blockchain, and determining, from the adaptation library set according to the blockchain identifier of the second blockchain, a target adaptation library associated with the second blockchain; and acquiring, from the target adaptation library, the message encapsulation format compatible with the second blockchain corresponding to the second node device.

The sub-ledger smart contract on the first blockchain is configured for realizing cross-chain transactions between the first blockchain and other blockchains, which is an interface of the cross-chain communication protocol and is a smart contract interface configured for interaction with node devices corresponding to different blockchains. A specific manner in which the first node device determines the message encapsulation format compatible with the second blockchain may include: acquiring a blockchain identifier of the second blockchain; acquiring an adaptation library set from the sub-ledger smart contract on the first blockchain, and determining, from the adaptation library set according to the blockchain identifier of the second blockchain, a target adaptation library associated with the second blockchain; and acquiring, from the target adaptation library, the message encapsulation format compatible with the second blockchain corresponding to the second node device.

Specifically, the first node device may acquire the blockchain identifier of the second blockchain, acquire the adaptation library set from the sub-ledger smart contract on the first blockchain, and determine, from the adaptation library set according to the blockchain identifier of the second blockchain, the target adaptation library associated with the second blockchain. The adaptation library set included in the sub-ledger smart contract on the first blockchain includes adaptation libraries associated with a plurality of blockchains. That is, one blockchain corresponds to one adaptation library. The adaptation library includes a message encapsulation format of the corresponding blockchain, which helps to coordinate interaction between sub-ledger smart contracts on any two blockchains. Through the adaptation library, data compatible with the corresponding blockchain can be constructed, and encoding and decoding of smart contract information written in different blockchain standards can be processed. For example, the first node device may encapsulate, through the adaptation library associated with the second blockchain, the target transaction data that needs to be transmitted to the second node device into data that the second node device can parse. In this way, the second node device can parse and process the target transaction data transmitted by the first node device.

The adaptation library set included in the sub-ledger smart contract on the first blockchain may be stored in an adaptation library module (i.e., an auxiliary sub-ledger smart contract) of the sub-ledger smart contract on the first blockchain. An adaptation library in the adaptation library module of the sub-ledger smart contract on the first blockchain is configured for establishing compatible connection calculations with the corresponding blockchain to achieve cross-chain interaction with the node device that maintains the corresponding chain. At the same time, the first node device may add a new adaptation library to the adaptation library module of the sub-ledger smart contract on the first blockchain to support a new blockchain. Copies of all adaptation libraries in the sub-ledger smart contract on the first blockchain may be stored in the node devices maintaining the first blockchain, or copies of all adaptation libraries may be stored. After the new adaptation library is added to the adaptation library module of the sub-ledger smart contract on the first blockchain, the first node device may perform a cross-chain transaction with the corresponding new blockchain through the new adaptation library. The first node device may acquire, from the target adaptation library, the message encapsulation format compatible with the second blockchain corresponding to the second node device. In this way, modularization can allow a plurality of adaptation libraries to be inserted into a smart contract stack to ensure ease of cross-chain transactions. At the same time, the cross-chain data transmitted by the corresponding blockchain may alternatively be parsed and verified through the adaptation library.

In some embodiments, the adding a new adaptation library to the adaptation library set included in the sub-ledger smart contract on the first blockchain may include the following specific content: verifying, when a cross-chain communication request transmitted by a third node device corresponding to a third blockchain is received, validity of the third node device according to a risk control rule in the cross-chain communication protocol and the cross-chain communication request, to obtain a validity verification result; acquiring a message encapsulation format compatible with the third blockchain when the validity verification result indicates that the third node device is valid; generating, according to the message encapsulation format compatible with the third blockchain, an adaptation library associated with the third blockchain; and adding the adaptation library associated with the third blockchain to the adaptation library set included in the sub-ledger smart contract on the first blockchain.

In some embodiments, if the first node device receives the cross-chain communication request transmitted by the third node device corresponding to the third blockchain, the risk control rule in the cross-chain communication protocol may be acquired. The risk control rule in the cross-chain communication protocol stipulates a condition for validity of a node device. For example, the risk control rule in the cross-chain communication protocol stipulates that when the node device has a credit greater than a target credit threshold, is real-named, and uses a secure link (i.e., a relevant data transaction security measure is adopted), the node device is determined to be valid. The node device may set a corresponding risk control rule according to a requirement. Before the third node device transmits the cross-chain communication request to the first node device, the third node device needs to meet the cross-chain communication protocol. That is, the third node device needs to agree to the cross-chain communication protocol and perform cross-chain transactions with node devices corresponding to other blockchains according to the cross-chain communication protocol. Further, the third node device may generate a cross-chain communication request for cross-chain transactions with the first node device according to the cross-chain communication protocol. The cross-chain communication request carries device feature information configured for verifying validity of the third node device, such as a credit of the third node device, real-name information on whether the third node device is real-named, and security information on whether the third node device uses a secure link.

After receiving the cross-chain communication request transmitted by the third node device, the first node device may verify the validity of the third node device according to the risk control rule in the cross-chain communication protocol and the cross-chain communication request. For example, if the risk control rule in the cross-chain communication protocol stipulates that the node device is valid only when the credit thereof is greater than the target credit threshold, the first node device can acquire the credit of the third node device from the cross-chain communication request. If the credit of the third node device is greater than the target credit threshold, it is determined that the third node device is valid. If the credit of the third node device is less than or equal to the target credit threshold, it is determined that the third node device is not valid. For example, if the risk control rule in the cross-chain communication protocol stipulates that the node device is valid only when the node device is real-named and uses a secure link, the first node device can acquire real-name information and security information about the third node device that are carried in the cross-chain communication request. If the third node device is real-named and uses a secure link, it is determined that the third node device is valid. If the third node device is not real-named and does not use the secure link, it is determined that the third node device is not valid. In some embodiments, the first node device may call a device validity verification model stored on the first blockchain and input device feature information of the first node device into the device validity verification model on the first blockchain, and through the device validity verification model, the validity of the third node device is predicted according to the risk control rule in the cross-chain communication protocol to obtain a validity prediction result about the third node device. The validity prediction result about the third node device includes that the third node device is valid or that the third node device is not valid. In this way, by predicting the validity of the third node device through the device validity verification model, determination efficiency of validity prediction of the third node device can be improved.

Further, the first node device acquires a message encapsulation format compatible with the third blockchain if determining that the third node device is valid. Specifically, when the third node device transmits the cross-chain communication request to the first node device, after adding the message encapsulation format compatible with the third node device to the cross-chain communication request, the first node device may detect whether the cross-chain communication request transmitted by the third node device carries the message encapsulation format compatible with the third node device. If the cross-chain communication request transmitted by the third node device carries the message encapsulation format compatible with the third node device, an adaptation library associated with the third blockchain is generated according to the message encapsulation format compatible with the third blockchain. If the cross-chain communication request transmitted by the third node device does not carry the message encapsulation format compatible with the third node device, the first node device transmits to the third node device a request for acquiring the message encapsulation format compatible with the third node device, to acquire the message encapsulation format compatible with the third node device. Further, the first node device may add the adaptation library associated with the third blockchain to the adaptation library set included in the sub-ledger smart contract on the first blockchain. In this way, cross-chain transactions can be achieved between the first node device on the first blockchain and node devices on more blockchains.

S102: Determine a target block where target transaction data associated with the second node device is located, encapsulate, according to the message encapsulation format compatible with the second blockchain, the target transaction data and transaction verification information of the target transaction data that are in the target block on the first blockchain to obtain a target data packet, and encapsulate a block header of the target block according to the message encapsulation format compatible with the second blockchain to obtain an encapsulated block header.

In some embodiments, the first node device may acquire a blockchain identifier of the target block according to a service requirement or request. The blockchain identifier is configured for identifying a target block where the target transaction data associated with the second node device is located. Then, the first node device may determine, according to the blockchain identifier, the target block where the target transaction data associated with the second node device is located.

In some embodiments, the first node device may determine, according to the service requirement or request, target transaction data associated with the second node device, thereby locating a target block where the target transaction data is located.

In some embodiments, the determining a target block where target transaction data associated with the second node device is located, encapsulating, according to the message encapsulation format compatible with the second blockchain, the target transaction data and transaction verification information of the target transaction data that are in the target block on the first blockchain to obtain a target data packet, and encapsulating a block header of the target block according to the message encapsulation format compatible with the second blockchain to obtain an encapsulated block header includes: acquiring the target transaction data from a block body of the target block, and encapsulating, according to a transaction data encapsulation format in the message encapsulation format compatible with the second blockchain, the target transaction data to obtain encapsulated target transaction data; acquiring the transaction verification information of the target transaction data from the block header of the target block, and encapsulating, according to a transaction verification encapsulation format in the message encapsulation format compatible with the second blockchain, the transaction verification information to obtain encapsulated transaction verification information; combining the encapsulated target transaction data and the encapsulated transaction verification information to obtain the target data packet; and encapsulating, according to a block header encapsulation format in the message encapsulation format compatible with the second blockchain, the block header of the target block to obtain the encapsulated block header.

In some embodiments, the first node device may acquire the target transaction data from the block body of the target block, and the target transaction data is associated with the second node device. That is, the target transaction data is cross-chain data between the first node device and the second node device (such as cross-chain synchronization data that the first node device needs to synchronize to the second node device or cross-chain transfer assets that the first node device needs to transfer to the second node device). The message encapsulation format compatible with the second blockchain may include a transaction data encapsulation format about the target transaction data, a transaction verification encapsulation format about the transaction verification information, and a block header encapsulation format about the block header. The first node device may encapsulate, according to the transaction data encapsulation format in the message encapsulation format compatible with the second blockchain, the target transaction data in the target block on the first blockchain to obtain the encapsulated target transaction data. The transaction data encapsulation format may include a transaction structure, a transaction protocol, a transaction encryption mode, and an encoding mode about the transaction data in the first blockchain. For example, if the transaction data encapsulation format indicates that a transaction structure is (a resource transfer-from account, a resource transfer-to account, an amount of resources to be transferred), the first node device needs to encapsulate the target transaction data according to the transaction data encapsulation format, for example, (Account 1 on the first blockchain, Account 2 on the second blockchain, 20).

At the same time, the first node device may also acquire the transaction verification information of the target transaction data from the block header of the target block. The transaction verification information is configured for verifying whether the first node device performs a transaction service corresponding to the target transaction data, that is, whether there is a transaction corresponding to the target transaction data on the first blockchain (such as whether there is a target block corresponding to the target transaction data). The transaction verification information may include a Merkle path corresponding to the target block, a block address, and block information corresponding to the target block. The block information of the target block may include a parent block hash value of the target block or information in the block header of the target block. The first node device may acquire the transaction verification encapsulation format from the message encapsulation format compatible with the second blockchain, encapsulate the transaction verification information, and obtain encapsulated transaction verification information. The transaction verification encapsulation format may include a verification information type (such as a Merkle path, a hash value of a parent block header, or a block address) about the transaction verification information, an information encryption mode, and an information encoding mode. Further, the first node device may combine the encapsulated target transaction data and the encapsulated transaction verification information to obtain the target data packet.

Specifically, the first node device may acquire the block header corresponding to the target block from the target block of the first blockchain, and encapsulate, according to the block header encapsulation format in the message encapsulation format compatible with the second blockchain, the block header of the target block to obtain the encapsulated block header. The block header encapsulation format may include a block structure (such as an information feature, a generation timestamp, and a version number), a block encryption mode, and a block encoding mode about the block header. For example, encapsulation of the block header includes perform serialization, coding and/or encryption on data in the block header according to the block header encapsulation format, and then packaged the processed data to obtain the encapsulated block header.

The first blockchain includes a sub-ledger smart contract generated based on the cross-chain communication protocol, i.e., a sub-ledger smart contract written according to a data processing specification of the first blockchain and the cross-chain communication protocol. The sub-ledger smart contract on the first blockchain is stored in each node device maintaining the first blockchain. When it is detected that there is cross-chain data that needs to be transmitted (such as target transaction data, transaction verification information, and a block header) in each node device, the sub-ledger smart contract on the first blockchain is automatically called to encapsulate the cross-chain data that needs to be transmitted and transmit encapsulated cross-chain data.

S103: Transmit the target data packet to a target relay server associated with the second node device, and transmit the encapsulated block header to a target oracle server associated with the second node device, where the target relay server is configured to transmit the target data packet to the second node device, the target oracle server is configured to transmit the encapsulated block header to the second node device, and the second node device is configured to process the target transaction data in the target data packet when the target transaction data passes verification according to a data verification rule on the second blockchain, the encapsulated block header, and the transaction verification information in the target data packet, where the data verification rule is associated with the cross-chain communication protocol.

Specifically, the first node device may transmit the target data packet to the target relay server associated with the second node device (i.e., the target relay server trusted by the second node device, or establishing communication connection with the second node device), and transmit the encapsulated block header to the target oracle server associated with the second node device (i.e., the target oracle server trusted by the second node device, or establishing communication connection with the second node device). Both the target relay server and the target oracle server are independent entities outside the blockchain. In this way, the target relay server and the target oracle server outside the blockchain forward the target data packet and the encapsulated block header respectively. Compared with the manner of using an intermediate blockchain to transmit cross-chain data between two blockchains, this solution can achieve decentralization and can also form an open cross-chain ecosystem, thereby improving security of cross-chain data transmission. At the same time, the target data packet and the encapsulated block header are transmitted respectively by using two channels, i.e., the target relay server and the target oracle server, which can improve security of the transmission of the target data packet and the encapsulated block header and prevent a risk of single-point attacks. For example, when the target relay server is attacked and the target data packet is tampered with, after the second node device receives the encapsulated block header of the target oracle server and a tampered target data packet transmitted by the target relay server, the target transaction data may not pass the verification due to mismatch between the encapsulated block header and tampered transaction verification information or target transaction data.

The target relay server is configured to transmit the target data packet to the second node device. The target oracle server is configured to transmit the encapsulated block header to the second node device. The second node device is configured to process the target transaction data in the target data packet when the target transaction data passes verification according to a data verification rule on the second blockchain, the encapsulated block header, and the transaction verification information in the target data packet. The data verification rule is associated with the cross-chain communication protocol. That is, the data verification rule is a verification rule about transaction data specified in the cross-chain communication protocol. Processing the target transaction data in the target data packet means processing the target transaction data according to normal service logic, such as transfer and accounting. The relay server is a server configured to forward data packets, while the target relay server is a server configured to forward target data packets. An oracle server is a server configured to forward encapsulated block headers. An oracle in the oracle server may refer to an oracle server that can provide data required to verify transaction data. The target oracle server is a server configured to forward an encapsulated block header related to the target block. The target oracle server can provide data required to verify target transaction data.

In some embodiments, the sub-ledger smart contract on the first blockchain may include a first conversation module, a first verification module, a first network module, and a first adaptation library module. The first conversation module is configured to receive cross-chain data (such as target transaction data, transaction verification information, and a block header) that the first node device needs to transmit to the second node device through the cross-chain communication protocol. Specifically, when the first node device performs a transaction service corresponding to the target transaction data, the first node device may call the sub-ledger smart contract on the first blockchain, write the target transaction data into the first conversation module, and write a blockchain identifier of the first blockchain and a blockchain identifier of the second blockchain at the same time. The first conversation module may use a target adaptation library compatible with the second blockchain to encapsulate the target transaction data to obtain encapsulated target transaction data. Further, the first conversation module may transmit the encapsulated target transaction data to the first verification module. At the same time, the first conversation module may use the target adaptation library compatible with the second blockchain to encapsulate the transaction verification information of the target transaction data, obtain encapsulated transaction verification information, and transmit the encapsulated transaction verification information to the first verification module. The first verification module may combine the encapsulated target transaction data and the encapsulated transaction verification information to obtain the target data packet. Further, the first verification module may use the target data packet to notify the first network module that the block header of the target block needs to be transmitted to the second node device. At the same time, the first verification module may further use the target data packet to notify the target relay server to acquire the target data packet from the first blockchain.

Specifically, the first network module may notify the target oracle server to acquire the block header of the target block from the first blockchain. According to the notification of the first network module, the target oracle server may transmit an acquisition request for the block header of the target block to the first node device. The first node device may call the first conversation module to use the target adaptation library compatible with the second blockchain to encapsulate the block header of the target block to obtain an encapsulated block header. The first conversation module may transmit the encapsulated block header to the first network module, and the first network module transmits the encapsulated block header to the target oracle server. After acquiring the target data packet, the target relay server may store the target data packet off-chain. When a preset condition is met, the target relay server transmits the target data packet to the second node device. Similarly, after acquiring the encapsulated block header, the target oracle server may store the encapsulated block header off-chain. When the preset condition is met, the target oracle server transmits the encapsulated block header to the second node device.

In some embodiments, a specific manner in which the first node device transmits the target data packet to the target relay server associated with the second node device may include: determining, from a candidate relay server set, candidate relay servers associated with the second node device; determining the target relay server from the candidate relay servers associated with the second node device; and acquiring a first interface protocol of the target relay server, calling the sub-ledger smart contract on the first blockchain, and transmitting the target data packet to the target relay server according to the first interface protocol of the target relay server.

Specifically, the first node device may acquire, from the candidate relay server set, the candidate relay servers associated with the second node device. The candidate relay servers associated with the second node device may be relay servers trusted by the second node device, or relay servers establishing communication connections with the second node device. Further, the first node device may determine the target relay server from the candidate relay servers associated with the second node device, acquire the first interface protocol of the target relay server, call the sub-ledger smart contract on the first blockchain, and transmit the target data packet to the target relay server according to the first interface protocol of the target relay server. Other node devices (that is, third parties) other than the first node device and the second node device may become relay servers after passing qualification examination and interface adaptation. The first node device or the second node device may select a trusted relay server according to a requirement. Different blockchains may adaptively select trusted relay servers. A rule for qualification examination may be agreed upon in the cross-chain communication protocol. For example, when a node device has a credit higher than a preset credit threshold and is real-named, availability of a provided service is higher than target availability, and a secure link is used, it is determined that the node device is qualified to be a relay server. The interface adaptation means that all relay servers communicate according to a unified interface protocol and data forwarding interfaces are configured. In this way, the node devices can use the data forwarding interfaces in the relay servers to forward the target data packet to the corresponding node devices.

In some embodiments, the calling the sub-ledger smart contract on the first blockchain, and transmitting the target data packet to the target relay server according to the first interface protocol of the target relay server includes: calling the sub-ledger smart contract on the first blockchain, and acquiring a first data communication mode and a first communication data format in the first interface protocol; generating, according to the first communication data format, a first data forwarding request carrying the target data packet and the blockchain identifier of the second blockchain; and transmitting the first data forwarding request to the target relay server in the first data communication mode, the target relay server being configured to acquire the blockchain identifier of the second blockchain carried in the first data forwarding request, and forward, according to the blockchain identifier of the second blockchain, the target data packet to the second node device maintaining the second blockchain.

Specifically, the first node device may call the sub-ledger smart contract on the first blockchain, and acquire the first communication data format and the first data communication mode in the first interface protocol. The first communication data format may refer to a data format that the target relay server can parse, for example, (an original address, a destination address, data to be forwarded). The first data communication mode may refer to any one of Http (that is, Http is a network transport protocol), TCP (that is, a connection-oriented, reliable, byte-stream-based transport layer communication protocol), and a UDP (that is, a method for transmitting an encapsulated data packet without establishing a connection). The first node device may generate, according to the first communication data format, the first data forwarding request carrying the target data packet and the blockchain identifier of the second blockchain. Further, the first node device may transmit the first data forwarding request to the target relay server in the first data communication mode, and the target relay server may forward, according to the blockchain identifier of the second blockchain carried in the first data forwarding request, the target data packet to the second node device maintaining the second blockchain.

In some embodiments, the determining, by the first node device, the target relay server from the candidate relay servers associated with the second node device may include the following specific content: determining, when one candidate relay server is associated with the second node device, the candidate relay server associated with the second node device to be the target relay server; and acquiring, when at least two candidate relay servers are associated with the second node device, credits respectively corresponding to the at least two candidate relay servers, and determining the candidate relay server in the at least two candidate relay servers that has the maximum credit to be the target relay server.

Specifically, the first node device may acquire a quantity of the candidate relay servers associated with the second node device, and detect whether the quantity of the candidate relay servers associated with the second node device is greater than 1. If the quantity of the candidate relay servers associated with the second node device is equal to 1, the first node device may directly determine the candidate relay server associated with the second node device to be the target relay server. If at least two candidate relay servers are associated with the second node device, the first node device may determine the target relay server from the at least two candidate relay servers. Specifically, the first node device may acquire credits respectively corresponding to the at least two candidate relay servers, and determine the candidate relay server in the at least two candidate relay servers that has the maximum credit to be the target relay server. Certainly, the first node device may acquire feature information respectively corresponding to the at least two candidate relay servers. The feature information may include information such as credits, availability of provided services, and security. Further, the first node device may generate, according to the feature information corresponding to each candidate relay server, a device score corresponding to the candidate relay server, and determine the candidate relay server in the at least two candidate relay servers that has the highest device score to be the target relay server. In this way, the first node device can select a target relay server trusted by the first node device, which can improve security of data forwarding.

In some embodiments, a specific manner in which the first node device transmits the encapsulated block header to the target oracle server associated with the second node device may include: determining, from a candidate oracle server set, candidate oracle servers associated with the second node device; and determining the target oracle server from the candidate oracle servers associated with the second node device, acquiring a second interface protocol of the target oracle server, calling the sub-ledger smart contract on the first blockchain, and transmitting the encapsulated block header to the target oracle server according to the second interface protocol of the target oracle server.

Specifically, the first node device may acquire, from the candidate oracle server set, the candidate oracle servers associated with the second node device. The candidate oracle servers associated with the second node device may be oracle servers trusted by the second node device, or oracle servers establishing communication connections with the second node device. Further, the first node device may determine the target oracle server from the candidate oracle servers associated with the second node device, acquire the second interface protocol of the target oracle server, call the sub-ledger smart contract on the first blockchain, and transmit the encapsulated block header to the target oracle server according to the second interface protocol of the target oracle server. Other node devices (that is, third parties) other than the first node device and the second node device may become oracle servers after passing qualification examination and interface adaptation. The first node device or the second node device may select a trusted oracle server according to a requirement. Different blockchains may adaptively select trusted oracle servers. A rule for qualification examination may be agreed upon in the cross-chain communication protocol. For example, when a node device has a credit higher than a device credit threshold and is real-named, availability of a provided service is higher than target availability, and a secure link is used, it is determined that the node device is qualified to be an oracle server. The device credit threshold may be the same as or different from the above preset credit threshold required to become a relay server. The interface adaptation means that all oracle servers communicate according to a unified interface protocol and data forwarding interfaces are configured. In this way, the node devices can use the data forwarding interfaces in the oracle servers to forward the encapsulated block header to the corresponding node devices.

In some embodiments, a specific manner in which the first node device calls the sub-ledger smart contract on the first blockchain, and transmits the encapsulated block header to the target oracle server according to the second interface protocol of the target oracle server may include: calling the sub-ledger smart contract on the first blockchain, and acquiring a second data communication mode and a second communication data format in the second interface protocol; generating, according to the second communication data format, a second data forwarding request carrying the encapsulated block header and the blockchain identifier of the second blockchain; and transmitting the second data forwarding request to the target oracle server in the second data communication mode. The target oracle server is configured to forward, according to the blockchain identifier of the second blockchain carried in the second data forwarding request, the encapsulated block header to the second node device maintaining the second blockchain.

Specifically, the first node device may call the sub-ledger smart contract on the first blockchain, and acquire the second communication data format and the second data communication mode in the second interface protocol. The second communication data format may refer to a data format that the target oracle server can parse, for example, (an original address, a destination address, data to be forwarded). The second data communication mode may refer to any one of Http (that is, Http is a network transport protocol), TCP (that is, a connection-oriented, reliable, byte-stream-based transport layer communication protocol), and a UDP (that is, a method for transmitting an encapsulated data packet without establishing a connection). The first node device may generate, according to the second communication data format, the second data forwarding request carrying the encapsulated block header and the blockchain identifier of the second blockchain. Further, the first node device may transmit the second data forwarding request to the target oracle server in the second data communication mode, and the target oracle server may forward, according to the blockchain identifier of the second blockchain carried in the second data forwarding request, the encapsulated block header to the second node device maintaining the second blockchain.

In some embodiments, the determining, by the first node device, the target oracle server from the candidate oracle servers associated with the second node device may include the following specific content: determining, when one candidate oracle server is associated with the second node device, the candidate oracle server associated with the second node device to be the target oracle server; and acquiring, when at least two candidate oracle servers are associated with the second node device, credits respectively corresponding to the at least two candidate oracle servers, and determining the candidate oracle server in the at least two candidate oracle servers that has the maximum credit to be the target oracle server.

Specifically, the first node device may acquire a quantity of the candidate oracle servers associated with the second node device, and detect whether the quantity of the candidate oracle servers associated with the second node device is greater than 1. If the quantity of the candidate oracle servers associated with the second node device is equal to 1, the first node device may directly determine the candidate oracle server associated with the second node device to be the target oracle server. If at least two candidate oracle servers are associated with the second node device, the first node device may determine the target oracle server from the at least two candidate oracle servers. Specifically, the first node device may acquire credits respectively corresponding to the at least two candidate oracle servers, and determine the candidate oracle server in the at least two candidate oracle servers that has the maximum credit to be the target oracle server. Certainly, the first node device may acquire feature information respectively corresponding to the at least two candidate oracle servers. The feature information may include information such as credits, availability of provided services, and security. Further, the first node device may generate, according to the feature information corresponding to each candidate oracle server, a device score corresponding to the candidate oracle server, and determine the candidate oracle server in the at least two candidate oracle servers that has the highest device score to be the target oracle server. In this way, the first node device can select a target oracle server trusted by the first node device, which can improve security of data forwarding.

In some embodiments, the target oracle server is configured to transmit the encapsulated block header to the second node device when a quantity of blocks is greater than a target quantity threshold. The quantity of blocks is a quantity corresponding to blocks on the first blockchain whose generation timestamps are later than a generation timestamp of the target block. After acquiring the encapsulated block header corresponding to the target block on the first blockchain, the target oracle server may store the encapsulated block header outside the blockchain (e.g., locally on the target oracle server). At the same time, the target oracle server may acquire the quantity of blocks corresponding to the blocks on the first blockchain whose generation timestamps are later than the generation timestamp of the target block, that is, acquire a quantity of block confirmations corresponding to the target block. When a block whose generation timestamp is later than the generation timestamp of the target block is added to the first blockchain, one is added to the quantity of block confirmations corresponding to the target block. When the target oracle server determines that the block data is greater than a target data threshold, indicating that the target block reaches finality on the first blockchain, the target oracle server may transmit the encapsulated block header to the second node device. "The target block reaches finality on the first blockchain" indicates that the target block cannot be revoked or changed. In this way, the encapsulated block header is transmitted to the second node device only when the target block reaches finality on the first blockchain, which can ensure that cross-chain transactions are successfully performed.

In some embodiments, the target relay server is configured to transmit the target data packet to the second node device when it is determined according to the block header of the target block on the first blockchain that the target transaction data in the target data packet passes verification. After acquiring the target data packet, the target relay server may store the target data packet outside the blockchain (e.g., locally on the target relay server). At the same time, the target relay server may verify the target transaction data according to the block header of the target block on the first blockchain, that is, verify whether the first node device performs the transaction service corresponding to the target transaction data. If the target transaction data passes the verification, the target relay server may transmit the target data packet to the second node device. If the target transaction data does not pass the verification, the target relay server may determine the target data packet to be an invalid message and eliminate the invalid message to prevent attacks. When invalid messages from a same source (that is, a same node device) are encountered multiple times, malicious behaviors are reported to reduce the credit of the corresponding node device.

After receiving the target data packet and the encapsulated block header, the second node device may parse the target data packet and obtain the target transaction data and the transaction verification information. Further, the second node device may verify the target transaction data, that is, verify whether the first node device successfully performs the transaction service corresponding to the target transaction data. Specifically, the second node device may verify the target transaction data according to the encapsulated block header and the transaction verification information. The encapsulated block header includes relevant information of the target block, such as a feature value of the target transaction data (such as a Merkle tree root hash value), a block generation timestamp, and a parent block hash value. In some embodiments, the second blockchain includes a sub-ledger smart contract generated based on the cross-chain communication protocol. After receiving the target data packet and the encapsulated block header, the second node device may call the sub-ledger smart contract on the second blockchain to verify the target transaction data.

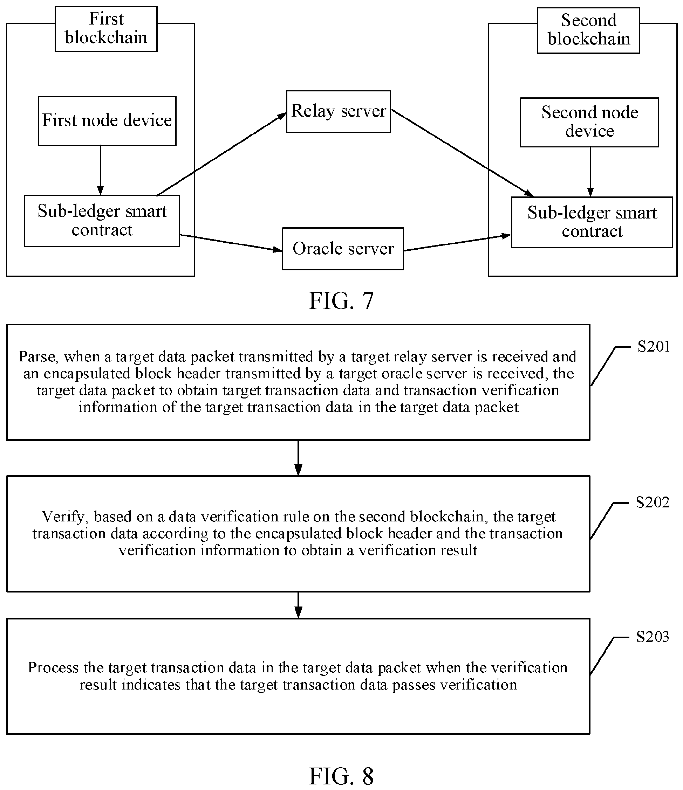

As shown in FIG. 7, FIG. 7 is a schematic diagram of cross-chain communication according to an embodiment of this disclosure. As shown in FIG. 7, the first blockchain includes a sub-ledger smart contract generated based on the cross-chain communication protocol, and the second blockchain includes a sub-ledger smart contract generated based on the cross-chain communication protocol. As shown in FIG. 7, when the first node device maintaining the first blockchain receives the target transaction data, a target smart contract (such as an disclosure contract that executes the target transaction data) on the first blockchain may be called according to a transaction type of the target transaction data to perform a transaction service corresponding to the target transaction data. The first node device may generate a target block about the target transaction data, and add the target block to the first blockchain. At the same time, when the target transaction data is data associated with the second node device, the first node device, when calling the target smart contract on the first blockchain to perform the transaction service corresponding to the target transaction data, may call the sub-ledger smart contract on the first blockchain to encapsulate the cross-chain data (such as the target transaction data, the transaction verification information of the target transaction data, and the block header of the target block) that needs to be transmitted to the second node device, and transmit a target data packet obtained by encapsulating the target transaction data and the transaction verification information of the target transaction data to a target relay server (the target relay server may be determined by the first node device from the candidate relay servers). At the same time, the first node device may call the sub-ledger smart contract on the first blockchain and transmit an encapsulated block header obtained by encapsulating the block header of the target block to a target oracle server (the target oracle server may be determined by the first node device from the candidate oracle servers). For specific content, reference may be made to operations S101 to S103 above. Details are not described again in the embodiments of this disclosure.

Further, after receiving the encapsulated block header, the target oracle server may acquire a quantity of blocks on the first blockchain whose generation timestamps are later than a generation timestamp of the target block, and when the quantity of blocks is greater than a target quantity threshold, transmit the encapsulated block header to the second node device. That is, when determining that the target block reaches finality on the first blockchain, the target oracle server transmits the encapsulated block header to the second node device. After receiving the encapsulated block header, the target relay server may transmit the target data packet to the second node device when it is determined according to the block header of the target block on the first blockchain that the target transaction data in the target data packet passes verification. The target relay server and the target oracle server are both independent entities outside the blockchain. In this way, by forwarding the target data packet and the encapsulated block header separately through the two independent entities outside the blockchain, a risk of single-point forwarding attacks can be prevented, and security of cross-chain communication can be improved. In other words, as long as an independence condition between the target oracle server and the target relay server is not broken, trustless effective transfer of arbitrary cross-chain data can be guaranteed, which improves security of cross-chain data transmission. At the same time, the first node device synchronizes data such as the target transaction data associated with the second node device to the second node device, and there is no need to synchronize all data on the first blockchain to the second node device to reduce data transmission costs, which greatly saves on-chain storage costs and storage expenses.

Further, when receiving the target data packet and the encapsulated block header through the sub-ledger smart contract on the second blockchain, the second node device may call the sub-ledger smart contract on the second blockchain to verify, based on the data verification rule on the second blockchain, the target transaction data according to the encapsulated block header and the transaction verification information in the target data packet. When the target transaction data passes the verification, the sub-ledger smart contract on the second blockchain is called to transmit the target transaction data to a target smart contract on the second blockchain and perform the transaction service corresponding to the target transaction data. The target smart contract on the second blockchain is determined based on a transaction type of the target transaction data. In this way, on-chain verification of the target transaction data can be realized, which prevents tampering with the target transaction data, improves security of the target transaction data, and improves security and efficiency of cross-chain communication.

In this embodiment of this disclosure, a general cross-chain communication architecture is provided. The cross-chain communication architecture formulates a cross-chain communication protocol. The cross-chain communication protocol includes data encapsulation formats respectively compatible with a plurality of blockchains and an access condition for node devices corresponding to the blockchains to join cross-chain communication (i.e., the risk control rule). The cross-chain communication architecture includes an oracle server and a relay server configured to achieve cross-chain communication. When cross-chain communication is performed between the first blockchain and the second blockchain, both the first node device corresponding to the first blockchain and the second node device corresponding to the second blockchain meet the cross-chain communication protocol, i.e., both the first node device and the second node device meet the access condition for cross-chain communication in the cross-chain communication protocol, which is conducive to ensuring security of cross-chain communication. During specific implementation, the first node device may select, from the cross-chain communication protocol on the first blockchain, a data encapsulation format compatible with the second blockchain, encapsulate the target transaction data and transaction verification information of the target transaction data that are in the target block on the first blockchain to obtain a target data packet, and encapsulate a block header of the target block according to the message encapsulation format compatible with the second blockchain to obtain an encapsulated block header. This is conducive to enabling the second node device to successfully parse the target data packet and the encapsulated block header, and achieving interconnection between the first node device and the second node device, that is, interconnection between the first blockchain and the second blockchain, i.e., achieving cross-chain communication.

Further, the first node device may independently transmit the target data packet and the encapsulated block header in two ways, that is, transmit the target data packet to a target relay server associated with the second node device in the cross-chain communication architecture, and transmit the encapsulated block header to a target oracle server associated with the second node device in the cross-chain communication architecture. The relay server transmits the target data packet to the second node device, and the target oracle server transits the encapsulated block header to the second node device. The target relay server and the target oracle server are both independent entities outside the blockchain. In this way, by forwarding the target data packet and the encapsulated block header separately through the two independent entities outside the blockchain, a risk of single-point forwarding attacks can be prevented, and security of cross-chain communication can be improved. In other words, as long as an independence condition between the target oracle server and the target relay server is not broken, trustless effective transfer of arbitrary cross-chain data can be guaranteed, which improves security of cross-chain data transmission. At the same time, the first node device synchronizes data such as the target transaction data associated with the second node device to the second node device, and there is no need to synchronize all data on the first blockchain to the second node device to reduce data transmission costs, which greatly saves on-chain storage costs and storage expenses. After the second node device acquires the target data packet and the encapsulated block header, the second node device processes the target transaction data in the target data packet only when the target transaction data passes verification according to a data verification rule on the second blockchain, the encapsulated block header, and the transaction verification information in the target data packet, thereby achieving on-chain verification of the target transaction data, preventing tampering with the target transaction data, improving security of the target transaction data, and improving security and efficiency of cross-chain communication.

Further, referring to FIG. 8, FIG. 8 is a schematic flowchart of a blockchain data processing method according to an embodiment of this disclosure. As shown in FIG. 8, the method may be performed by a second node device in the blockchain network and maintaining the second blockchain. The blockchain network may refer to the above core consensus network, the above service network, or other blockchain networks, which is not limited in this embodiment of this disclosure. The second node device may be a server connected to the blockchain network, or may be a user terminal connected to the blockchain network. The second node device may refer to any node device in the node devices that maintain the second blockchain. A specific form of the second node device is not limited herein. The method may include, but is not limited to, at least the following operations:

S201: Parse, when a target data packet transmitted by a target relay server is received and an encapsulated block header transmitted by a target oracle server is received, the target data packet to obtain target transaction data and transaction verification information of the target transaction data in the target data packet.

Specifically, the target data packet is transmitted by a first node device maintaining a first blockchain to the target relay server, the encapsulated block header is transmitted by the first node device to the target oracle server, the target data packet is obtained by encapsulating the target transaction data and the transaction verification information of the target transaction data based on a message encapsulation format compatible with the second blockchain maintained by the second node device, the target transaction data is transaction data in a target block of the first blockchain, and the encapsulated block header is obtained by encapsulating a block header of the target block based on the message encapsulation format. The message encapsulation format is selected from a cross-chain communication protocol on the first blockchain, and the first node device and the second node device communicate according to the cross-chain communication protocol. For specific content, reference may be made to the content of operation S101 to operation S103 in FIG. 6 above.

S202: Verify, based on a data verification rule on the second blockchain, the target transaction data according to the encapsulated block header and the transaction verification information to obtain a verification result.

Specifically, the second node device acquires the data verification rule on the second blockchain. The data verification rule is associated with the cross-chain communication protocol. The data verification rule may be a verification rule for transaction data (such as target transaction data) agreed in the cross-chain communication protocol. The first node device may verify the target transaction data according to the encapsulated block header and the transaction verification information to obtain a verification result. The verification result includes that the target transaction data passes the verification or the target transaction data does not pass the verification. The transaction verification information may include a Merkle path corresponding to the target block, block information (such as a generation timestamp, a block address, and a block version number) corresponding to the target block, and a parent block hash value corresponding to the target block. The data verification rules may include a verification rule about the Merkle path, a verification rule about the parent block hash value, and a verification rule about the block information.

In some embodiments, the second blockchain includes a sub-ledger smart contract generated based on the cross-chain communication protocol. The transaction verification information includes a Merkle path associated with the target block. The data verification rule on the second blockchain includes a verification rule about the Merkle path. A specific manner in which the second node device verifies the target transaction data according to the encapsulated block header and the transaction verification information may include: calling the sub-ledger smart contract on the second blockchain, performing a hash algorithm on the target transaction data to obtain a to-be-verified hash value, and performing a hash operation on the to-be-verified hash value according to the Merkle path to obtain a to-be-verified tree root hash value; acquiring a Merkle tree root hash value from the encapsulated block header; and acquiring a consistency check result of the Merkle tree root hash value and the to-be-verified tree root hash value, and generating, according to the consistency check result, a verification result configured for indicating whether the target transaction data passes verification. If the consistency check result indicates that the Merkle tree root hash value in the encapsulated block header is the same as the to-be-verified tree root hash value, a verification result configured for indicating that the target transaction data passes the verification is generated. If the consistency check result indicates that the Merkle tree root hash value in the encapsulated block header is different from the to-be-verified tree root hash value, a verification result configured for indicating that the target transaction data does not pass the verification is generated.

Specifically, a Merkle tree is also referred to as a hash binary tree, is a data structure configured to efficiently summarize and verify integrity of large data sets, including a Merkle path from transaction data to a tree root. The Merkle tree is generated by combining leaf nodes in pairs. Therefore, a tree root hash value may be obtained according to a Merkle path between the target transaction data and the tree root. The second node device may call the sub-ledger smart contract on the second blockchain, perform the hash algorithm on the target transaction data to obtain the to-be-verified hash value, and perform the hash operation on the to-be-verified hash value according to the Merkle path to obtain the to-be-verified tree root hash value. The verification rule for the Merkle path is configured for indicating that when the Merkle tree root hash value in the encapsulated block header is the same as the to-be-verified tree root hash value, it is determined that the target transaction data passes the verification; and when the Merkle tree root hash value in the encapsulated block header is different from the to-be-verified tree root hash value, it is determined that the target transaction data does not pass the verification. Further, the second node device may acquire the Merkle tree root hash value from the encapsulated block header according to the verification rule about the Merkle path, and if the Merkle tree root hash value in the encapsulated block header is the same as the to-be-verified tree root hash value, generate a verification result configured for indicating that the target transaction data passes the verification. If the Merkle tree root hash value in the encapsulated block header is different from the to-be-verified tree root hash value, a verification result configured for indicating that the target transaction data does not pass the verification is generated.

In some embodiments, the transaction verification information includes a target block hash value of a parent block of the target block, and the data verification rule on the second blockchain includes a verification rule about the target block hash value of the parent block of the target block. A specific manner in which the second node device verifies the target transaction data according to the encapsulated block header and the transaction verification information may include: calling the sub-ledger smart contract on the second blockchain, and acquiring a block hash value of the parent block of the target block from the encapsulated block header as a to-be-verified parent block hash value; and comparing consistency between the to-be-verified parent block hash value and the target parent block hash value, obtaining a second comparison result, and generating, according to the second comparison result, a verification result configured for indicating whether the target transaction data passes verification. The verification rule for the target parent block hash value indicates that when the target parent block hash value in the encapsulated block header is the same as the to-be-verified parent block hash value in the encapsulated block header, it is determined that the target transaction data passes the verification; and when the target parent block hash value in the encapsulated block header is different from the to-be-verified parent block hash value in the encapsulated block header, it is determined that the target transaction data does not pass the verification. Specifically, if the to-be-verified parent block hash value is the same as the target parent block hash value, the second node device generates a verification result configured for indicating that the target transaction data passes the verification; and if the to-be-verified parent block hash value is different from the target parent block hash value, the second node device generates a verification result configured for indicating that the target transaction data does not pass the verification.

S203: Process the target transaction data in the target data packet when the verification result indicates that the target transaction data passes verification.

Specifically, if the verification result indicates that the target transaction data passes verification, the second node device may call the target smart contract on the second blockchain to process the target transaction data in the target data packet. The target smart contract on the second blockchain associated with the is target transaction data. The target smart contract on the second blockchain is determined based on a transaction type of the target transaction data. If the transaction type of the target transaction data is a digital collection transaction, the target smart contract on the second blockchain may refer to a digital collection contract.

In some embodiments, the second blockchain includes a sub-ledger smart contract generated based on the cross-chain communication protocol. The sub-ledger smart contract on the second blockchain includes a second conversation module, a second verification module, a second network module, and a second adaptation library module. Similarly, the second conversation module may be configured to encapsulate cross-chain data. The second verification module is configured to verify transaction data. The second network module is configured for communication. The second adaptation library module is configured to store adaptation libraries associated with the blockchain. The target oracle server may transmit the encapsulated block header to the second network module. The second network module may forward the encapsulated block header to the second verification module. Similarly, the target relay server may transmit the target data packet to the second verification module, and after receiving the target data packet and the encapsulated block header, the second verification module may verify, based on the data verification rule on the second blockchain, the target transaction data according to the encapsulated block header and the transaction verification information. When the target transaction data passes the verification, the second verification module may transmit the target transaction data to the second conversation module. The second conversation module may transmit the target transaction data to the target smart contract on the second blockchain according to a contract address of the target smart contract, and call the target smart contract on the second blockchain to process the target transaction data.

For example, the target transaction data is (Account 1 in the first blockchain 502, Account 2 in the second blockchain 512, 20), where Account 1 represents a resource transfer-from account, Account 2 represents a resource transfer-to account, and 20 represents an amount of resources to be transferred. Account 1 is an account in the first blockchain 502, and Account 2 is an account in the second blockchain 512. The first node device may call a smart contract about asset transactions on the first blockchain to perform a transaction in which 20 pieces of resource data are deducted from Account 1 of the first blockchain indicated by the target transaction data, generate a target block corresponding to the target transaction data, and store the target block corresponding to the target transaction data on the first blockchain. Further, the first node device may call the sub-ledger smart contract on the first blockchain and transmit the target data packet including the target transaction data and the transaction verification information to the second node device through the target relay server. The first node device may call the sub-ledger smart contract on the first blockchain and transmit the encapsulated block header corresponding to the target block to the second node device through the target oracle server. The second node device may verify, through the sub-ledger smart contract on the second blockchain, the target transaction data according to the encapsulated block header and the transaction verification information. When the target transaction data passes the verification, the second node device may call a smart contract about asset transactions on the second blockchain to perform a transaction in which 20 pieces of resource data are added to Account 2 of the second blockchain indicated by the target transaction data.

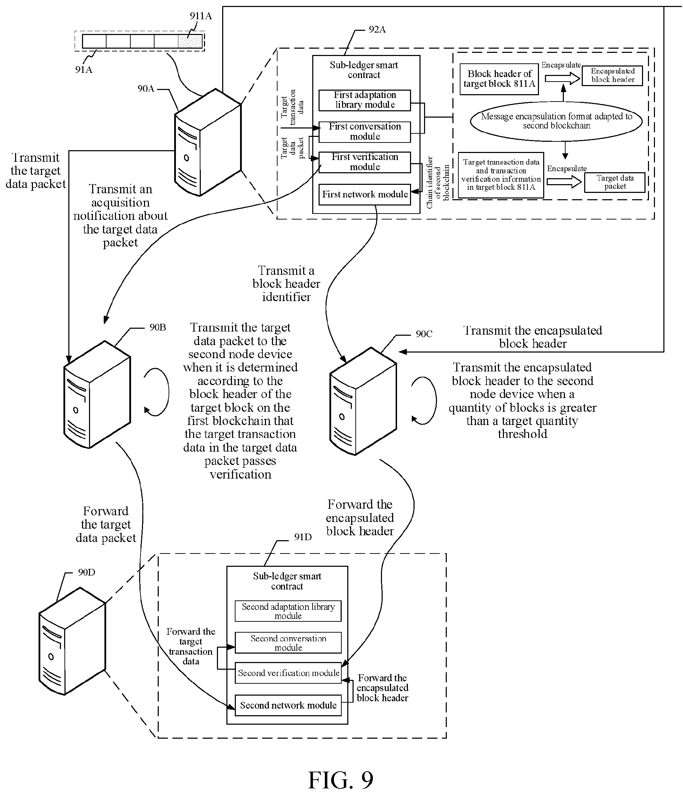

As shown in FIG. 9, FIG. 9 is a schematic diagram of disclosure of cross-chain communication according to an embodiment of this disclosure. As shown in FIG. 9, when receiving target transaction data associated with a second node device 90D, a first node device 90A may call a target smart contract on a first blockchain to perform a transaction service corresponding to the target transaction data. The target smart contract on the first blockchain is determined based on a transaction type of the target transaction data. Further, the first node device 90A may generate a target block 911A about a transaction service corresponding to the target transaction data, and the target block 911A is added to a first blockchain 91A. Further, the first node device may call a sub-ledger smart contract 92A on the first blockchain, and the sub-ledger smart contract 92A on the first blockchain is written based on a contract writing specification on the first blockchain 91A and a cross-chain communication protocol. As shown in FIG. 9, the sub-ledger smart contract 92A includes a first conversation module, a first verification module, a first network module, and a first adaptation library module. The first node device 90A selects, from a first adaptation library module through the first conversation module in the sub-ledger smart contract 92A, a message encapsulation format compatible with a second blockchain corresponding to the second node device 90D. Further, the first conversation module may use the message encapsulation format compatible with the second blockchain to encapsulate target transaction data in a target block 911A to obtain a target data packet, and use the message encapsulation format compatible with the second blockchain to encapsulate a block header of the target block 911A to obtain an encapsulated block header.

Further, the first conversation module may transmit the target data packet to the first verification module. The first verification module may transmit an acquisition notification about the target data packet to a target relay server 90B to notify the target relay server to acquire the target data packet from the first node device 90A. After receiving the acquisition notification about the target data packet transmitted by the first verification module, the target relay server 90B may acquire the target data packet from the first node device 90A. At the same time, the target relay server 90B may verify the target transaction data according to the block header of the target block 911A on the first blockchain, and after determining that the target transaction data passes verification, forward the target data packet to the second node device 90D. Similarly, the first verification module may transmit a blockchain identifier about the second blockchain to the first network module. The first network module may transmit an acquisition request for an encapsulated block header to the target oracle server 90C based on the blockchain identifier of the second blockchain. The acquisition request carries a block identifier of the target block 911A. The acquisition request is configured for instructing the target oracle server 90C to acquire the encapsulated block header from the first node device 90A, and to instruct the target oracle server 90C to forward the encapsulated block header to the second node device 90D.

After receiving the acquisition request for an encapsulated block header, the target oracle server 90C may acquire the encapsulated block header from the first node device based on the block identifier of the target block. After acquiring the encapsulated block header corresponding to the target block 911A on the first blockchain, the target oracle server 90C may store the encapsulated block header outside the blockchain (e.g., locally on the target oracle server 90C). At the same time, the target oracle server 90C may acquire a quantity of blocks corresponding to blocks on the first blockchain 91A whose generation timestamps are later than a generation timestamp of the target block. When the target oracle server 90C determines that the block data is greater than a target data threshold, indicating that the target block 911A reaches finality on the first blockchain, the target oracle server 90C may transmit the encapsulated block header to the second node device 90D. As shown in FIG. 9, the second blockchain includes a sub-ledger smart contract 91D generated based on a contract writing specification on the second blockchain and the cross-chain communication protocol. The sub-ledger smart contract 91D includes a second conversation module, a second verification module, a second network module, and a second adaptation library module. The target relay server 90B may forward the target data packet to the second network module, and the target oracle server may forward the encapsulated block header to the second verification module.

Further, the second network module may forward the encapsulated block header to the second verification module, and the second verification module may acquire a data verification rule on the second blockchain, and verify the target transaction data according to the encapsulated block header and the transaction verification information to obtain a verification result. If the target transaction data passes the verification, the second verification module may forward the target transaction data to the second conversation module. The second conversation module may forward the target transaction data to the target smart contract on the second blockchain and perform a transaction service corresponding to the target transaction data. The target smart contract on the second blockchain associated with the is target transaction data. The target smart contract on the second blockchain is determined based on a transaction type of the target transaction data. If the transaction type of the target transaction data is a digital collection transaction, the target smart contract on the second blockchain may refer to a digital collection contract. As can be seen, by forwarding the target data packet and the encapsulated block header separately through the two independent entities outside the blockchain, i.e., the target relay server and the target oracle server, a risk of single-point forwarding attacks can be prevented, and security of cross-chain communication can be improved. At the same time, the second node device processes the target transaction data in the target data packet only when the target transaction data passes verification according to a data verification rule on the second blockchain, the encapsulated block header, and the transaction verification information in the target data packet, thereby achieving on-chain verification of the target transaction data, preventing tampering with the target transaction data, improving security of the target transaction data, and improving security and efficiency of cross-chain communication.

In this embodiment of this disclosure, a general cross-chain communication architecture is provided. The cross-chain communication architecture formulates a cross-chain communication protocol. The cross-chain communication protocol includes data encapsulation formats respectively compatible with a plurality of blockchains and an access condition for node devices corresponding to the blockchains to join cross-chain communication (i.e., the risk control rule). The cross-chain communication architecture includes an oracle server and a relay server configured to achieve cross-chain communication. When cross-chain communication is performed between the first blockchain and the second blockchain, both the first node device corresponding to the first blockchain and the second node device corresponding to the second blockchain meet the cross-chain communication protocol, i.e., both the first node device and the second node device meet the access condition for cross-chain communication in the cross-chain communication protocol, which is conducive to ensuring security of cross-chain communication. During specific implementation, the first node device may select a data encapsulation format compatible with the second blockchain from the cross-chain communication protocol on the first blockchain, encapsulate the target transaction data and transaction verification information of the target transaction data that are in the target block on the first blockchain to obtain a target data packet, and encapsulate a block header of the target block according to the message encapsulation format compatible with the second blockchain to obtain an encapsulated block header. This is conducive to enabling the second node device to successfully parse the target data packet and the encapsulated block header, and achieving interconnection between the first node device and the second node device, that is, interconnection between the first blockchain and the second blockchain, i.e., achieving cross-chain communication.

Further, the first node device may independently transmit the target data packet and the encapsulated block header in two ways, that is, transmit the target data packet to a target relay server associated with the second node device in the cross-chain communication architecture, and transmit the encapsulated block header to a target oracle server associated with the second node device in the cross-chain communication architecture. The relay server transmits the target data packet to the second node device, and the target oracle server transits the encapsulated block header to the second node device. The target relay server and the target oracle server are both independent entities outside the blockchain. In this way, by forwarding the target data packet and the encapsulated block header separately through the two independent entities outside the blockchain, a risk of single-point forwarding attacks can be prevented, and security of cross-chain communication can be improved. In other words, as long as an independence condition between the target oracle server and the target relay server is not broken, trustless effective transfer of arbitrary cross-chain data can be guaranteed, which improves security of cross-chain data transmission. At the same time, the first node device synchronizes data such as the target transaction data associated with the second node device to the second node device, and there is no need to synchronize all data on the first blockchain to the second node device to reduce data transmission costs, which greatly saves on-chain storage costs and storage expenses. After the second node device acquires the target data packet and the encapsulated block header, the second node device processes the target transaction data in the target data packet when the target transaction data passes verification according to a data verification rule on the second blockchain, the encapsulated block header, and the transaction verification information in the target data packet, thereby achieving on-chain verification of the target transaction data, preventing tampering with the target transaction data, improving security of the target transaction data, and improving security and efficiency of cross-chain communication. At the same time, the target transaction data is verified according to the data verification rule on the second blockchain, the encapsulated block header, and the transaction verification information in the target data packet, which consumes on-chain storage only when in real need, and greatly saves on-chain storage costs and expenses.

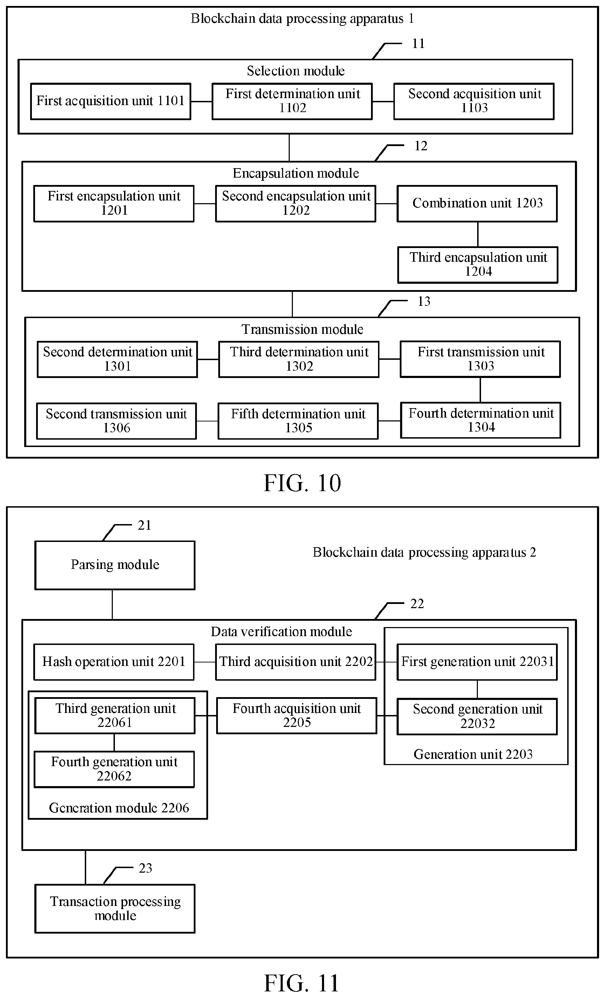

Further, referring to FIG. 10, FIG. 10 is a schematic structural diagram of a blockchain data processing apparatus according to an embodiment of this disclosure. The blockchain data processing apparatus 1 may be a computer-readable instruction (including program code) running in a computer device. For example, the blockchain data processing apparatus 1 is disclosure software. The blockchain data processing apparatus 1 may be configured to perform corresponding operations in the method provided in the embodiments of this disclosure. As shown in FIG. 10, the blockchain data processing apparatus 1 may be a first node device maintaining a first blockchain. The blockchain data processing apparatus 1 may include: a selection module 11, an encapsulation module 12, a transmission module 13, a device verification module 14, an acquisition module 15, a generation module 16, and an addition module 17.

The selection module 11 is configured to select, from a cross-chain communication protocol on a first blockchain, a message encapsulation format compatible with a second blockchain. The first blockchain is maintained by a first node device in a blockchain network, the second blockchain is maintained by a second node device in the blockchain network, and the first node device and the second node device communicate according to the cross-chain communication protocol.

The encapsulation module 12 is configured to determine a target block where target transaction data associated with the second node device is located, encapsulate, according to the message encapsulation format compatible with the second blockchain, the target transaction data and transaction verification information of the target transaction data that are in a target block on the first blockchain to obtain the target data packet, and encapsulate a block header of the target block according to the message encapsulation format compatible with the second blockchain to obtain an encapsulated block header.

The transmission module 13 is configured to transmit the target data packet to a target relay server associated with the second node device, and transmit the encapsulated block header to a target oracle server associated with the second node device. The target relay server is configured to transmit the target data packet to the second node device, the target oracle server is configured to transmit the encapsulated block header to the second node device, and the second node device is configured to process the target transaction data in the target data packet when the target transaction data passes verification according to a data verification rule on the second blockchain, the encapsulated block header, and the transaction verification information in the target data packet. The data verification rule is associated with the cross-chain communication protocol to transmit the target data packet to the target relay server associated with the second node device.

The first blockchain includes a sub-ledger smart contract generated based on the cross-chain communication protocol. The selection module 11 includes: a first acquisition unit 1101 configured to acquire a blockchain identifier of the second blockchain; a first determination unit 1102 is configured to acquire an adaptation library set from the sub-ledger smart contract on the first blockchain, and determine, from the adaptation library set according to the blockchain identifier of the second blockchain, a target adaptation library associated with the second blockchain; and a second acquisition unit 1103 configured to acquire, from the target adaptation library, the message encapsulation format compatible with the second blockchain corresponding to the second node device.

The blockchain data processing apparatus 1 further includes: a device verification module 14 configured to verify, when a cross-chain communication request transmitted by a third node device corresponding to a third blockchain is received, validity of the third node device according to a risk control rule in the cross-chain communication protocol and the cross-chain communication request, to obtain a validity verification result; an acquisition module 15 configured to acquire a message encapsulation format compatible with the third blockchain when the validity verification result indicates that the third node device is valid; a generation module 16 configured to generate, according to the message encapsulation format compatible with the third blockchain, an adaptation library associated with the third blockchain; and an addition module 17 configured to add the adaptation library associated with the third blockchain to the adaptation library set included in the sub-ledger smart contract on the first blockchain.

The encapsulation module 12 includes: a first encapsulation unit 1201 is configured to acquire the target transaction data from a block body of the target block, and encapsulate, according to a transaction data encapsulation format in the message encapsulation format compatible with the second blockchain, the target transaction data to obtain encapsulated target transaction data; a second encapsulation unit 1202 configured to acquire the transaction verification information of the target transaction data from the block header of the target block, and encapsulate, according to a transaction verification encapsulation format in the message encapsulation format compatible with the second blockchain, the transaction verification information to obtain encapsulated transaction verification information; a combination unit 1203 configured to combine the encapsulated target transaction data and the encapsulated transaction verification information to obtain the target data packet; and

a third encapsulation unit 1204 configured to encapsulate, according to a block header encapsulation format in the message encapsulation format compatible with the second blockchain, the block header of the target block to obtain the encapsulated block header.

The transmission module 13 includes: a second determination unit 1301 configured to determine, from a candidate relay server set, candidate relay servers associated with the second node device; a third determination unit 1302 configured to determine the target relay server from the candidate relay servers associated with the second node device; and

a first transmission unit 1303 configured to acquire a first interface protocol of the target relay server, call the sub-ledger smart contract on the first blockchain, and transmit the target data packet to the target relay server according to the first interface protocol of the target relay server.

The first transmission unit 1303 is specifically configured to: call the sub-ledger smart contract on the first blockchain, and acquire a first data communication mode and a first communication data format in the first interface protocol; generate, according to the first communication data format, a first data forwarding request carrying the target data packet and the blockchain identifier of the second blockchain; and transmit the first data forwarding request to the target relay server in the first data communication mode, the target relay server being configured to acquire the blockchain identifier of the second blockchain carried in the first data forwarding request, and forward, according to the blockchain identifier of the second blockchain, the target data packet to the second node device maintaining the second blockchain.

In some embodiments, the third determination unit 1302 is specifically configured to: determine, when one candidate relay server is associated with the second node device, the candidate relay server associated with the second node device to be the target relay server.

In some embodiments, the third determination unit 1302 is configured to acquire, when at least two candidate relay servers are associated with the second node device, credits respectively corresponding to the at least two candidate relay servers, and determine the candidate relay server in the at least two candidate relay servers that has the maximum credit to be the target relay server.

The transmission module 13 further includes: a fourth determination unit 1304 configured to determine, from a candidate oracle server set, candidate oracle servers associated with the second node device; a fifth determination unit 1305 configured to determine the target oracle server from the candidate oracle servers associated with the second node device; and a second transmission unit 1306 configured to acquire a second interface protocol of the target oracle server, call the sub-ledger smart contract on the first blockchain, and transmit the encapsulated block header to the target oracle server according to the second interface protocol of the target oracle server.

The second transmission unit 1306 is specifically configured to: call the sub-ledger smart contract on the first blockchain, and acquire a second data communication mode and a second communication data format in the second interface protocol; generate, according to the second communication data format, a second data forwarding request carrying the encapsulated block header and the blockchain identifier of the second blockchain; and transmit the second data forwarding request to the target oracle server in the second data communication mode. The target oracle server is configured to forward, according to the blockchain identifier of the second blockchain carried in the second data forwarding request, the encapsulated block header to the second node device maintaining the second blockchain.

The target oracle server is configured to transmit the encapsulated block header to the second node device when a quantity of blocks is greater than a target quantity threshold. The quantity of blocks is a quantity corresponding to blocks on the first blockchain whose generation timestamps are later than a generation timestamp of the target block.

The target relay server is configured to transmit the target data packet to the second node device when it is determined according to the block header of the target block on the first blockchain that the target transaction data in the target data packet passes verification.

According to one embodiment of this disclosure, modules of the blockchain data processing apparatus 1 shown in FIG. 10 may be separately or wholly combined into one or several units, or one (or more) of the units herein may further be divided into multiple sub-units of smaller functions. In this way, same operations can be implemented, and implementation of the technical effects of the embodiments of this disclosure is not affected. The foregoing modules are divided based on logical functions. In an actual disclosure, a function of one module may also be implemented by a plurality of units, or functions of a plurality of modules are implemented by one unit. In other embodiments of this disclosure, the video data processing apparatus may also include other units. In an actual disclosure, the functions may also be cooperatively implemented by other units and may be cooperatively implemented by a plurality of units.

In this embodiment of this disclosure, a general cross-chain communication architecture is provided. The cross-chain communication architecture formulates a cross-chain communication protocol. The cross-chain communication protocol includes data encapsulation formats respectively compatible with a plurality of blockchains and an access condition for node devices corresponding to the blockchains to join cross-chain communication (i.e., the risk control rule). The cross-chain communication architecture includes an oracle server and a relay server configured to achieve cross-chain communication. When cross-chain communication is performed between the first blockchain and the second blockchain, both the first node device corresponding to the first blockchain and the second node device corresponding to the second blockchain meet the cross-chain communication protocol, i.e., both the first node device and the second node device meet the access condition for cross-chain communication in the cross-chain communication protocol, which is conducive to ensuring security of cross-chain communication. During specific implementation, the first node device may select a data encapsulation format compatible with the second blockchain from the cross-chain communication protocol on the first blockchain, encapsulate the target transaction data and transaction verification information of the target transaction data that are in the target block on the first blockchain to obtain a target data packet, and encapsulate a block header of the target block according to the message encapsulation format compatible with the second blockchain to obtain an encapsulated block header. This is conducive to enabling the second node device to successfully parse the target data packet and the encapsulated block header, and achieving interconnection between the first node device and the second node device, that is, interconnection between the first blockchain and the second blockchain, i.e., achieving cross-chain communication.

Further, the first node device may independently transmit the target data packet and the encapsulated block header in two ways, that is, transmit the target data packet to a target relay server associated with the second node device in the cross-chain communication architecture, and transmit the encapsulated block header to a target oracle server associated with the second node device in the cross-chain communication architecture. The relay server transmits the target data packet to the second node device, and the target oracle server transits the encapsulated block header to the second node device. The target relay server and the target oracle server are both independent entities outside the blockchain. In this way, by forwarding the target data packet and the encapsulated block header separately through the two independent entities outside the blockchain, a risk of single-point forwarding attacks can be prevented, and security of cross-chain communication can be improved. In other words, as long as an independence condition between the target oracle server and the target relay server is not broken, trustless effective transfer of arbitrary cross-chain data can be guaranteed, which improves security of cross-chain data transmission. At the same time, the first node device synchronizes data such as the target transaction data associated with the second node device to the second node device, and there is no need to synchronize all data on the first blockchain to the second node device to reduce data transmission costs, which greatly saves on-chain storage costs and storage expenses. After the second node device acquires the target data packet and the encapsulated block header, the second node device processes the target transaction data in the target data packet when the target transaction data passes verification according to a data verification rule on the second blockchain, the encapsulated block header, and the transaction verification information in the target data packet, thereby achieving on-chain verification of the target transaction data, preventing tampering with the target transaction data, improving security of the target transaction data, and improving security and efficiency of cross-chain communication. At the same time, the target transaction data is verified according to the data verification rule on the second blockchain, the encapsulated block header, and the transaction verification information in the target data packet, which consumes on-chain storage only when in real need, and greatly saves on-chain storage costs and expenses. Processing the target transaction data may mean performing normal service processing on the target transaction data according to service logic.

Further, referring to FIG. 11, FIG. 11 is a schematic structural diagram of a blockchain data processing apparatus according to an embodiment of this disclosure. The blockchain data processing apparatus 2 may be a computer-readable instruction (including program code) running in a computer device. For example, the blockchain data processing apparatus 2 is disclosure software. The blockchain data processing apparatus 2 may be configured to perform corresponding operations in the method provided in the embodiments of this disclosure. As shown in FIG. 11, the blockchain data processing apparatus 2 may be a second node device maintaining a second blockchain. The blockchain data processing apparatus 2 may include: a parsing module 21, a data verification module 22, and a transaction verification module 23.

The parsing module 21 is configured to parse, when a target data packet transmitted by a target relay server to the second node device is received and an encapsulated block header transmitted by a target oracle server to the second node device is received, the target data packet to obtain target transaction data and transaction verification information of the target transaction data in the target data packet. The target data packet is transmitted by the first node device maintaining the first blockchain to the target relay server, the encapsulated block header is transmitted by the first node device to the target oracle server, the target data packet is obtained by encapsulating the target transaction data and the transaction verification information of the target transaction data based on a message encapsulation format compatible with the second blockchain maintained by the second node device, the target transaction data is transaction data in a target block of the first blockchain, and the encapsulated block header is obtained by encapsulating a block header of the target block based on the message encapsulation format. The message encapsulation format is selected from a cross-chain communication protocol on the first blockchain, and the first node device and the second node device communicate according to the cross-chain communication protocol.

The data verification module 22 is configured to verify, based on a data verification rule on the second blockchain, the target transaction data according to the encapsulated block header and the transaction verification information to obtain a verification result. The data verification rule is associated with the cross-chain communication protocol.

The transaction processing module 23 is configured to process the target transaction data in the target data packet when the verification result indicates that the target transaction data passes verification.

The second blockchain includes a sub-ledger smart contract generated based on the cross-chain communication protocol. The transaction verification information includes a Merkle path associated with the target block. The data verification rule on the second blockchain includes a verification rule about the Merkle path.

The data verification module 22 includes: a hash operation unit 2201 configured to call the sub-ledger smart contract on the second blockchain, perform a hash algorithm on the target transaction data to obtain a to-be-verified hash value, and perform a hash operation on the to-be-verified hash value according to the Merkle path to obtain a to-be-verified tree root hash value; a third acquisition unit 2202 configured to acquire a Merkle tree root hash value from the encapsulated block header; and a generation unit 2203 configured to acquire a consistency check result of the Merkle tree root hash value and the to-be-verified tree root hash value, and generate, according to the consistency check result, a verification result configured for indicating whether the target transaction data passes verification.

The generation unit 2203 includes: a first generation unit 22031 configured to generate, if the consistency check result indicates that the Merkle tree root hash value in the encapsulated block header is the same as the to-be-verified tree root hash value, a verification result configured for indicating that the target transaction data passes the verification; and a second generation unit 22032 configured to generate, if the consistency check result indicates that the Merkle tree root hash value in the encapsulated block header is different from the to-be-verified tree root hash value, a verification result configured for indicating that the target transaction data does not pass the verification.

The second blockchain includes a sub-ledger smart contract generated based on the cross-chain communication protocol, the transaction verification information includes a target parent block hash value of a parent block of the target block, and the data verification rule on the second blockchain includes a verification rule about the target parent block hash value.

The data verification module 22 includes: a fourth acquisition unit 2205 configured to call the sub-ledger smart contract on the second blockchain, and acquire a block hash value of the parent block of the target block from the encapsulated block header as a to-be-verified parent block hash value; and a generation unit 2206 configured to acquire a consistency check result of the to-be-verified parent block hash value and the target parent block hash value, and generate, according to the consistency check result, a verification result configured for indicating whether the target transaction data passes verification.

The generation module 2206 includes: a third generation unit 22061 configured to generate, if the consistency check result indicates that the to-be-verified parent block hash value is the same as the target parent block hash value, a verification result configured for indicating that the target transaction data passes the verification; and

a fourth generation unit 2207 configured to generate, if the consistency check result indicates that the to-be-verified parent block hash value is different from the target parent block hash value, a verification result configured for indicating that the target transaction data does not pass the verification.

According to one embodiment of this disclosure, modules of the blockchain data processing apparatus 2 shown in FIG. 11 may be separately or wholly combined into one or several units, or one (or more) of the units herein may further be divided into multiple sub-units of smaller functions. In this way, same operations can be implemented, and implementation of the technical effects of the embodiments of this disclosure is not affected. The foregoing modules are divided based on logical functions. In an actual disclosure, a function of one module may also be implemented by a plurality of units, or functions of a plurality of modules are implemented by one unit. In other embodiments of this disclosure, the video data processing apparatus may also include other units. In an actual disclosure, the functions may also be cooperatively implemented by other units and may be cooperatively implemented by a plurality of units.

In this embodiment of this disclosure, a general cross-chain communication architecture is provided. The cross-chain communication architecture formulates a cross-chain communication protocol. The cross-chain communication protocol includes data encapsulation formats respectively compatible with a plurality of blockchains and an access condition for node devices corresponding to the blockchains to join cross-chain communication (i.e., the risk control rule). The cross-chain communication architecture includes an oracle server and a relay server configured to achieve cross-chain communication. When cross-chain communication is performed between the first blockchain and the second blockchain, both the first node device corresponding to the first blockchain and the second node device corresponding to the second blockchain meet the cross-chain communication protocol, i.e., both the first node device and the second node device meet the access condition for cross-chain communication in the cross-chain communication protocol, which is conducive to ensuring security of cross-chain communication. During specific implementation, the first node device may select a data encapsulation format compatible with the second blockchain from the cross-chain communication protocol on the first blockchain, encapsulate the target transaction data and transaction verification information of the target transaction data that are in the target block on the first blockchain to obtain a target data packet, and encapsulate a block header of the target block according to the message encapsulation format compatible with the second blockchain to obtain an encapsulated block header. This is conducive to enabling the second node device to successfully parse the target data packet and the encapsulated block header, and achieving interconnection between the first node device and the second node device, that is, interconnection between the first blockchain and the second blockchain, i.e., achieving cross-chain communication.

Further, the first node device may independently transmit the target data packet and the encapsulated block header in two ways, that is, transmit the target data packet to a target relay server associated with the second node device in the cross-chain communication architecture, and transmit the encapsulated block header to a target oracle server associated with the second node device in the cross-chain communication architecture. The relay server transmits the target data packet to the second node device, and the target oracle server transits the encapsulated block header to the second node device. The target relay server and the target oracle server are both independent entities outside the blockchain. In this way, by forwarding the target data packet and the encapsulated block header separately through the two independent entities outside the blockchain, a risk of single-point forwarding attacks can be prevented, and security of cross-chain communication can be improved. In other words, as long as an independence condition between the target oracle server and the target relay server is not broken, trustless effective transfer of arbitrary cross-chain data can be guaranteed, which improves security of cross-chain data transmission. At the same time, the first node device synchronizes data such as the target transaction data associated with the second node device to the second node device, and there is no need to synchronize all data on the first blockchain to the second node device to reduce data transmission costs, which greatly saves on-chain storage costs and storage expenses. After the second node device acquires the target data packet and the encapsulated block header, the second node device processes the target transaction data in the target data packet when the target transaction data passes verification according to a data verification rule on the second blockchain, the encapsulated block header, and the transaction verification information in the target data packet, thereby achieving on-chain verification of the target transaction data, preventing tampering with the target transaction data, improving security of the target transaction data, and improving security and efficiency of cross-chain communication. At the same time, the target transaction data is verified according to the data verification rule on the second blockchain, the encapsulated block header, and the transaction verification information in the target data packet, which consumes on-chain storage only when in real need, and greatly saves on-chain storage costs and expenses.

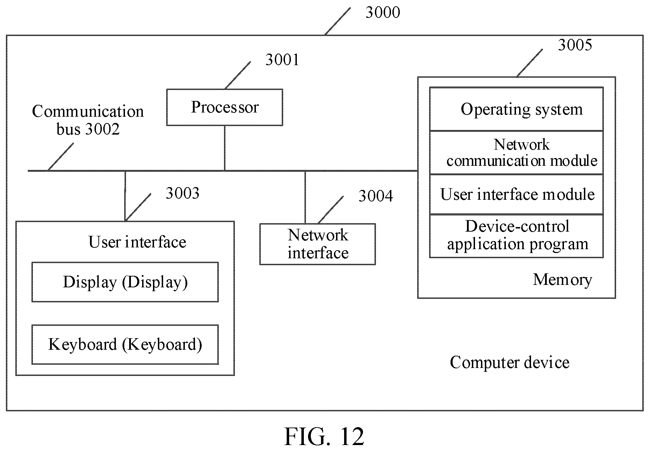

Further, referring to FIG. 12, FIG. 12 is a schematic diagram of a computer device according to an embodiment of this disclosure. As shown in FIG. 12, the computer device 3000 may be a consensus node 220A in the corresponding embodiment of FIG. 3 above. The computer device 3000 may include: at least one processor 3001, e.g., a CPU, at least one network interface 3004, a user interface 3003, a memory 3005, and at least one communication bus 3002. The communication bus 3002 is configured to implement connection and communication between these components. The user interface 3003 may include a display, a keyboard. In some embodiments, the network interface 3004 may include a standard wired interface and a standard wireless interface (e.g., a WI-FI interface). The memory 3005 may be a high-speed random access memory (RAM), or may be a non-volatile memory, for example, at least one magnetic disk memory. In some embodiments, the memory 3005 may alternatively be at least one storage apparatus that is located far away from the foregoing processor 3001. As shown in FIG. 12, the memory 3005 used as a computer storage medium may include an operating system, a network communication module, a user interface module, and a device-control disclosure program.

In the computer device 3000 shown in FIG. 12, the network interface 3004 is mainly configured for network communication of the second node device with the target relay server and the target oracle server. The user interface 3003 is mainly configured to provide an input interface for a user. The processor 3001 may be configured to invoke the device-control disclosure program stored in the memory 3005.

The computer device 3000 described in this embodiment of this disclosure can implement the descriptions of the blockchain data processing method in the foregoing embodiment corresponding to FIG. 6 or FIG. 8, and can also implement the descriptions of the blockchain data processing apparatus 1 in the foregoing embodiment corresponding to FIG. 10 or the descriptions of the blockchain data processing apparatus 2 in the foregoing embodiment corresponding to FIG. 11. Details are not described herein again. In addition, the description of beneficial effects of the same method are not described herein again.

In addition, an embodiment of this disclosure further provides a computer-readable storage medium, where the computer-readable storage medium stores a computer-readable instruction executed by the foregoing blockchain data processing apparatus 1 or the foregoing blockchain data processing apparatus 2, and the computer-readable instruction includes program instructions. When a processor executes the program instructions, the description of the blockchain data processing method in the foregoing embodiment in FIG. 6 or FIG. 8 can be executed. Therefore, details are not described herein again. In addition, the description of beneficial effects of the same method are not described herein again. For technical details that are not disclosed in the computer-readable storage medium embodiments of this disclosure, refer to the descriptions of the method embodiments of this disclosure. As an example, the program instructions may be deployed on one computing device, or executed on multiple computing devices located at one position, or executed on multiple computing devices distributed at multiple positions and interconnected by using a communication network, and a blockchain system can be formed by multiple computing devices distributed at multiple positions and interconnected by using a communication network.

According to one aspect of this disclosure, a computer program product or a computer-readable instruction is provided. The computer program product or the computer-readable instruction includes computer-readable instructions, and the computer-readable instructions are stored in a computer-readable storage medium. A processor of a computer device reads the computer-readable instructions from the computer-readable storage medium, and the processor executes the computer-readable instructions, to cause the computer device to execute the descriptions of the blockchain data processing method in the foregoing embodiment corresponding to FIG. 6 or FIG. 8. Therefore, details are not described herein again. In addition, the description of beneficial effects of the same method are not described herein again.

A person of ordinary skill in the art may understand that all or some procedures in the methods in the foregoing embodiments may be implemented by a computer-readable instruction instructing relevant hardware. The program may be stored in a computer-readable storage medium. When the program is executed, the procedures of the foregoing method embodiments may be implemented. The foregoing storage medium may include a magnetic disc, an optical disc, a read-only memory (ROM), a RAM, or the like.

Technical features of the foregoing embodiments may be combined in different manners to form other embodiments. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of this disclosure, which are described specifically and in detail, but cannot be construed as a limitation to the patent scope of this disclosure. For a person of ordinary skill in the art, several transformations and improvements can be made without departing from the idea of this disclosure. These transformations and improvements belong to the protection scope of this disclosure. Therefore, the protection scope of the patent of this disclosure shall be subject to the appended claims.

**EP 4 560 981 A1**

Claims

1. A blockchain data processing method, executable by a first node device maintaining a first blockchain in a blockchain network, the method comprising:

   determining, according to a cross-chain communication protocol which the first blockchain supports, a message encapsulation format compatible with a second blockchain, the second blockchain being maintained by a second node device in the blockchain network, and the first node device and the second node device being configured to communicate according to the cross-chain communication protocol;
   determining a target block where target transaction data associated with the second node device is located;
   encapsulating, according to the message encapsulation format, the target transaction data and transaction verification information of the target transaction data in the target block to obtain a target data packet;
   encapsulating a block header of the target block according to the message encapsulation format to obtain an encapsulated block header; and
   transmitting the target data packet to a target relay server associated with the second node device, and transmitting the encapsulated block header to a target oracle server associated with the second node device, the target relay server being configured to transmit the target data packet to the second node device, the target oracle server being configured to transmit the encapsulated block header to the second node device, and the second node device being configured to process the target transaction data in the target data packet when the target transaction data passes verification according to a data verification rule on the second blockchain, the encapsulated block header, and the transaction verification information in the target data packet, the data verification rule being associated with the cross-chain communication protocol.

2. The method according to claim 1, wherein the encapsulating, according to the message encapsulation format, the target transaction data and transaction verification information of the target transaction data in the target block to obtain a target data packet, and encapsulating a block header of the target block according to the message encapsulation format to obtain an encapsulated block header comprises:

   acquiring the target transaction data from a block body of the target block, and encapsulating, according to a transaction data encapsulation format in the message encapsulation format, the target transaction data to obtain encapsulated target transaction data;
   acquiring the transaction verification information of the target transaction data from the block header of the target block, and encapsulating, according to a transaction verification encapsulation format in the message encapsulation format, the transaction verification information to obtain encapsulated transaction verification information;
   combining the encapsulated target transaction data and the encapsulated transaction verification information to obtain the target data packet; and
   encapsulating, according to a block header encapsulation format in the message encapsulation format, the block header of the target block to obtain the encapsulated block header.

3. The method according to claim 1 or 2, wherein the first blockchain comprises a sub-ledger smart contract generated based on the cross-chain communication protocol; and
   the determining, according to a cross-chain communication protocol which the first blockchain supports, a message encapsulation format compatible with a second blockchain comprises:

   acquiring a blockchain identifier of the second blockchain;
   acquiring an adaptation library set from the sub-ledger smart contract on the first blockchain, and determining, from the adaptation library set according to the blockchain identifier of the second blockchain, a target adaptation library associated with the second blockchain; and
   acquiring, from the target adaptation library, the message encapsulation format compatible with the second blockchain corresponding to the second node device.

4. The method according to claim 3, further comprising:

   verifying, in response to receiving a cross-chain communication request transmitted by a third node device corresponding to a third blockchain, validity of the third node device according to a risk control rule in the cross-chain communication protocol and the cross-chain communication request, to obtain a validity verification result;
   acquiring a message encapsulation format compatible with the third blockchain in response to the validity verification result indicating that the third node device is valid;

generating, according to the message encapsulation format compatible with the third blockchain, an adaptation library associated with the third blockchain; and

adding the adaptation library associated with the third blockchain to the adaptation library set comprised in the sub-ledger smart contract on the first blockchain.

5. The method according to claim 3 or 4, wherein the transmitting the target data packet to a target relay server associated with the second node device comprises:

determining, from a candidate relay server set, candidate relay servers associated with the second node device;

determining the target relay server from the candidate relay servers associated with the second node device; and

acquiring a first interface protocol of the target relay server, calling the sub-ledger smart contract on the first blockchain, and transmitting the target data packet to the target relay server according to the first interface protocol of the target relay server.

6. The method according to claim 5, wherein calling the sub-ledger smart contract on the first blockchain, and transmitting the target data packet to the target relay server according to the first interface protocol of the target relay server comprises:

calling the sub-ledger smart contract on the first blockchain, and acquiring a first data communication mode and a first communication data format in the first interface protocol;

generating, according to the first communication data format, a first data forwarding request carrying the target data packet and the blockchain identifier of the second blockchain; and

transmitting the first data forwarding request to the target relay server in the first data communication mode, the target relay server being configured to acquire the blockchain identifier of the second blockchain carried in the first data forwarding request, and forward, according to the blockchain identifier of the second blockchain, the target data packet to the second node device maintaining the second blockchain.

7. The method according to claim 5 or 6, wherein the determining the target relay server from the candidate relay servers associated with the second node device comprises:
determining, in response to one candidate relay server being associated with the second node device, the candidate relay server associated with the second node device to be the target relay server.

8. The method according to claim 5 or 6, wherein the determining the target relay server from the candidate relay servers associated with the second node device comprises:
acquiring, in response to at least two candidate relay servers being associated with the second node device, credits respectively corresponding to the at least two candidate relay servers, and determining the candidate relay server in the at least two candidate relay servers that has the maximum credit to be the target relay server.

9. The method according to any one of claims 3 to 8, wherein the transmitting the encapsulated block header to a target oracle server associated with the second node device comprises:

determining, from a candidate oracle server set, candidate oracle servers associated with the second node device;

determining the target oracle server from the candidate oracle servers associated with the second node device; and

acquiring a second interface protocol of the target oracle server, calling the sub-ledger smart contract on the first blockchain, and transmitting the encapsulated block header to the target oracle server according to the second interface protocol of the target oracle server.

10. The method according to claim 9, wherein the calling the sub-ledger smart contract on the first blockchain, and transmitting the encapsulated block header to the target oracle server according to the second interface protocol of the target oracle server comprises:

calling the sub-ledger smart contract on the first blockchain, and acquiring a second data communication mode and a second communication data format in the second interface protocol;

generating, according to the second communication data format, a second data forwarding request carrying the encapsulated block header and the blockchain identifier of the second blockchain; and

transmitting the second data forwarding request to the target oracle server in the second data communication mode; the target oracle server being configured to forward, according to the blockchain identifier of the second blockchain carried in the second data forwarding request, the encapsulated block header to the second node device maintaining the second blockchain.

11. The method according to any one of claims 1 to 10, wherein the target oracle server is configured to transmit the encapsulated block header to the second node device in response to a quantity of blocks being greater than a target quantity threshold, the quantity of blocks being a quantity corresponding to blocks on the first blockchain whose generation timestamps are later than a generation timestamp of the target block.

12. The method according to any one of claims 1 to 11, wherein the target relay server is configured to transmit the target data packet to the second node device in response to determining, according to the block header of the target block on the first blockchain, that the target transaction data in the target data packet passes verification.

13. A blockchain data processing method, executable by a second node device maintaining a second blockchain in a blockchain network, the method comprising:

parsing, in response to receiving a target data packet transmitted by a target relay server and an encapsulated block header transmitted by a target oracle server, the target data packet to obtain target transaction data and transaction verification information of the target transaction data in the target data packet; the target data packet being transmitted by a first node device maintaining a first blockchain to the target relay server, the encapsulated block header being transmitted by the first node device to the target oracle server, the target data packet being obtained by encapsulating the target transaction data and the transaction verification information of the target transaction data based on a message encapsulation format compatible with the second blockchain maintained by the second node device, the target transaction data being transaction data in a target block of the first blockchain, and the encapsulated block header being obtained by encapsulating a block header of the target block based on the message encapsulation format; the message encapsulation format being selected from a cross-chain communication protocol on the first blockchain, and the first node device and the second node device being configured to communicate according to the cross-chain communication protocol;
verifying, based on a data verification rule on the second blockchain, the target transaction data according to the encapsulated block header and the transaction verification information to obtain a verification result, the data verification rule being associated with the cross-chain communication protocol; and
processing the target transaction data in the target data packet in response to the verification result indicating that the target transaction data passes verification.

14. The method according to claim 13, wherein the second blockchain comprises a sub-ledger smart contract generated based on the cross-chain communication protocol, the transaction verification information comprises a Merkle path associated with the target block, and the data verification rule on the second blockchain comprises a verification rule about the Merkle path; and
the verifying, based on a data verification rule on the second blockchain, the target transaction data according to the encapsulated block header and the transaction verification information to obtain a verification result comprises:

calling the sub-ledger smart contract on the second blockchain, performing a hash algorithm on the target transaction data to obtain a to-be-verified hash value, and performing a hash operation on the to-be-verified hash value according to the Merkle path to obtain a to-be-verified tree root hash value;
acquiring a Merkle tree root hash value from the encapsulated block header; and
acquiring a consistency check result of the Merkle tree root hash value and the to-be-verified tree root hash value, and generating, according to the consistency check result, a verification result for indicating whether the target transaction data passes verification.

15. The method according to claim 13, wherein the second blockchain comprises a sub-ledger smart contract generated based on the cross-chain communication protocol, the transaction verification information comprises a target parent block hash value of a parent block of the target block, and the data verification rule on the second blockchain comprises a verification rule about the target parent block hash value; and
the verifying, based on a data verification rule on the second blockchain, the target transaction data according to the encapsulated block header and the transaction verification information to obtain a verification result comprises:

calling the sub-ledger smart contract on the second blockchain, and acquiring a block hash value of the parent block of the target block from the encapsulated block header as a to-be-verified parent block hash value; and acquiring a consistency check result of the to-be-verified parent block hash value and the target parent block hash value, and generating, according to the consistency check result, a verification result for indicating whether the target transaction data passes verification.

16. A blockchain data processing apparatus, comprising:

a selection module configured to determine, according to a cross-chain communication protocol which a first blockchain supports, a message encapsulation format compatible with a second blockchain, the first blockchain being maintained by a first node device in a blockchain network, the second blockchain being maintained by a second node device in the blockchain network, and the first node device and the second node device being configured to communicate according to the cross-chain communication protocol;

an encapsulation module configured to determine a target block where target transaction data associated with the second node device is located, encapsulate, according to the message encapsulation format, the target transaction data and transaction verification information of the target transaction data in the target block to obtain a target data packet, and encapsulate a block header of the target block according to the message encapsulation format to obtain an encapsulated block header; and

a transmission module configured to transmit the target data packet to a target relay server associated with the second node device, and transmit the encapsulated block header to a target oracle server associated with the second node device, the target relay server being configured to transmit the target data packet to the second node device, the target oracle server being configured to transmit the encapsulated block header to the second node device, and the second node device being configured to process the target transaction data in the target data packet when the target transaction data passes verification according to a data verification rule on the second blockchain, the encapsulated block header, and the transaction verification information in the target data packet, the data verification rule being associated with the cross-chain communication protocol to transmit the target data packet to the target relay server associated with the second node device.

17. A blockchain data processing apparatus, comprising:

a parsing module configured to parse, in response to receiving a target data packet transmitted by a target relay server to a second node device and an encapsulated block header transmitted by a target oracle server to the second node device, the target data packet to obtain target transaction data and transaction verification information of the target transaction data in the target data packet; the target data packet being transmitted by a first node device maintaining a first blockchain to the target relay server, the encapsulated block header being transmitted by the first node device to the target oracle server, the target data packet being obtained by encapsulating the target transaction data and the transaction verification information of the target transaction data based on a message encapsulation format compatible with the second blockchain maintained by the second node device, the target transaction data being transaction data in a target block of the first blockchain, and the encapsulated block header being obtained by encapsulating a block header of the target block based on the message encapsulation format; the message encapsulation format being selected from a cross-chain communication protocol on the first blockchain, and the first node device and the second node device being configured to communicate according to the cross-chain communication protocol;

a data verification module configured to verify, based on a data verification rule on the second blockchain, the target transaction data according to the encapsulated block header and the transaction verification information to obtain a verification result, the data verification rule being associated with the cross-chain communication protocol; and

a transaction processing module configured to process the target transaction data in the target data packet in response to the verification result indicating that the target transaction data passes verification.

18. A computer device, comprising: a memory and a processor, the memory having computer-readable instructions stored therein, and the processor being configured to execute the computer-readable instructions to cause the computer device to implement the method according to any one of claims 1 to 15.

19. A computer-readable storage medium, having computer-readable instructions stored therein, and the computer-readable instructions being loaded and executed by a processor to cause the processor to implement the method according to any one of claims 1 to 15.

20. A computer-readable storage medium, comprising computer-readable instructions, the computer-readable instructions being stored in a computer-readable storage medium, and the computer-readable instructions being read and executed by a processor to cause the processor to implement the method according to any one of claims 1 to 15.

| Block main body | | Block main body | | Block main body |
| --- | --- | --- | --- | --- |
| Version number | | Block header feature value of parent block | | Block header feature value of parent block |
| Input information feature value | Block header | Version number | Block header | Version number |
| Timestamp | | Input information feature value | | Input information feature value |
| Difficulty value | | Timestamp | | Timestamp |
| | | Difficulty value | | Difficulty value |

FIG. 1

Process of generating a new block

1. A node detects input information of the whole network

2. Verify the input information, store the input information to a memory pool, and update a hash tree

3. Update a timestamp

4. Try different nonces

5. Calculate a feature value

6. Repeat 2-5 above until a reasonable feature value is found

7. Package a block

8. Broadcast a new block externally

9. After verification by other nodes, link into a blockchain

FIG. 2

FIG. 3

FIG. 4

**FIG. 5**

| | |
|---|---|
| Select, from a cross-chain communication protocol on the first blockchain, a message encapsulation format adapted to a second blockchain | S101 |
| Determine a target block where target transaction data associated with the second node device is located, encapsulate, according to the message encapsulation format adapted to the second blockchain, the target transaction data and transaction verification information of the target transaction data that are in the target block on the first blockchain to obtain a target data packet, and encapsulate a block header of the target block according to the message encapsulation format adapted to the second blockchain to obtain an encapsulated block header | S102 |
| Transmit the target data packet to a target relay server associated with the second node device, and transmit the encapsulated block header to a target oracle server associated with the second node device, where the target relay server is configured to transmit the target data packet to the second node device, the target oracle server is configured to transmit the encapsulated block header to the second node device, and the second node device is configured to process the target transaction data in the target data packet when the target transaction data passes verification according to a data verification rule on the second blockchain, the encapsulated block header, and the transaction verification information in the target data packet, where the data verification rule is associated with the cross-chain communication protocol | S103 |

**FIG. 6**

First
blockchain

First node device

Relay server

Second
blockchain

Second node
device

Sub-ledger smart
contract

Oracle server

Sub-ledger smart
contract

FIG. 7

Parse, when a target data packet transmitted by a target relay server is received and
an encapsulated block header transmitted by a target oracle server is received, the
target data packet to obtain target transaction data and transaction verification
information of the target transaction data in the target data packet

S201

Verify, based on a data verification rule on the second blockchain, the target
transaction data according to the encapsulated block header and the transaction
verification information to obtain a verification result

S202

Process the target transaction data in the target data packet when the verification
result indicates that the target transaction data passes verification

S203

FIG. 8

FIG. 9

Blockchain data processing apparatus 1

Selection module ⌐ 11

First acquisition unit 1101 — First determination unit 1102 — Second acquisition unit 1103

Encapsulation module ⌐ 12

First encapsulation unit 1201 — Second encapsulation unit 1202 — Combination unit 1203

Third encapsulation unit 1204

Transmission module ⌐ 13

Second determination unit 1301 — Third determination unit 1302 — First transmission unit 1303

Second transmission unit 1306 — Fifth determination unit 1305 — Fourth determination unit 1304

FIG. 10

Parsing module ⌐ 21

Blockchain data processing apparatus 2

⌐ 22

Data verification module

Hash operation unit 2201 — Third acquisition unit 2202 — First generation unit 22031

Third generation unit 22061 — Fourth acquisition unit 2205 — Second generation unit 22032

Fourth generation unit 22062

Generation unit 2203

Generation module 2206

Transaction processing module ⌐ 23

FIG. 11

FIG. 12

## INTERNATIONAL SEARCH REPORT

| International application No. |
|---|
| **PCT/CN2023/124925** |

| A. | CLASSIFICATION OF SUBJECT MATTER |
|---|---|

H04L 9/40(2022.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTXC, DWPI, VCN: 区块链, 跨链, 第二, 目标区块链, 封装, 头, 交易, 验证, blockchain, cross-chain, second, target blockchain, encapsulation, header, transaction, validation

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | CN 111416808 A (TENPAY PAYMENT SCIENCE & TECHNOLOGY CO., LTD.) 14 July 2020 (2020-07-14) <br> claims 1-4 | 1-20 |
| A | WO 2020258849 A1 (ADVANCED NEW TECHNOLOGIES CO., LTD.) 30 December 2020 (2020-12-30) <br> entire document | 1-20 |
| A | WO 2021179655 A1 (TENCENT TECHNOLOGY (SHENZHEN) CO., LTD.) 16 September 2021 (2021-09-16) <br> entire document | 1-20 |
| A | WO 2022095244 A1 (HANGZHOU QULIAN TECHNOLOGY CO., LTD.) 12 May 2022 (2022-05-12) <br> entire document | 1-20 |
| A | WO 2022205958 A1 (ANT BLOCKCHAIN TECHNOLOGY (SHANGHAI) CO., LTD.) 06 October 2022 (2022-10-06) <br> entire document | 1-20 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **13 January 2024** | **20 January 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124925**

| Patent document cited in search report | | | Publication date (day/month/year) | Patent family member(s) | | | Publication date (day/month/year) |
|---|---|---|---|---|---|---|---|
| CN | 111416808 | A | 14 July 2020 | US | 2022231869 | A1 | 21 July 2022 |
| | | | | WO | 2021179661 | A1 | 16 September 2021 |
| WO | 2020258849 | A1 | 30 December 2020 | TW | 202101441 | A | 01 January 2021 |
| | | | | CN | 110417742 | A | 05 November 2019 |
| | | | | US | 2020177387 | A1 | 04 June 2020 |
| | | | | HK | 40016778 | A1 | 21 May 2021 |
| | | | | US | 2020366485 | A1 | 19 November 2020 |
| | | | | US | 2020366486 | A1 | 19 November 2020 |
| | | | | TW | 202101441 | A | 01 January 2021 |
| WO | 2021179655 | A1 | 16 September 2021 | US | 2022229577 | A1 | 21 July 2022 |
| | | | | CN | 111309711 | A | 19 June 2020 |
| | | | | HK | 40024827 | A0 | 18 December 2020 |
| WO | 2022095244 | A1 | 12 May 2022 | CN | 112446785 | A | 05 March 2021 |
| WO | 2022205958 | A1 | 06 October 2022 | CN | 112804358 | A | 14 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101441034